(19) Europäisches Patentamt
European Patent Office
Office européen des brevets

(11) Publication number: **0 078 168 A1**

# (12) EUROPEAN PATENT APPLICATION

(21) Application number: 82305636.1

(22) Date of filing: 22.10.82

(51) Int.Cl.³: F 16 H 25/06

(30) Priority: 28.10.81 GB 8132535

(43) Date of publication of application: 04.05.83 Bulletin 83/18

(84) Designated Contracting States: AT BE CH DE FR IT LI NL SE

(71) Applicant: TEKRON LICENSING BV
Lomboklaan 31
NL-3956 DE Leersum(NL)

(72) Inventor: Carden, Sir John Craven
P.O. Box N8159
Nassau(BS)

(74) Representative: Rennie, Ian Malcolm et al,
BOULT, WADE & TENNANT 27 Furnival Street
London EC4A 1PQ(GB)

## (54) Motion transmitting apparatus.

(57) A motion transmitting apparatus comprises a male member 203 and a female member 207 each with a part-spherical surface and a plurality of balls 205 engaging in guide, e.g. grooves 204, 206, forming guide paths comprising endless wavy paths in the two surfaces, both paths having the same number of waves. These guides are arranged so that relative swashing motion of the two members 203, 207 causes the meshing elements 205 to precess along both the paths thereby causing both elements to remain rotationally locked yet capable of swashing motion. This apparatus forms a unity ratio coupling device and, if one of the members is held stationary, provides a coupling for a swash plate pump or motor in which swashing of the plate without rotation is achieved with the plate driven by or driving a rotational element. More generally the device finds application in fixed angle unity ratio couplings giving homokinetic rotary transmission between inclined shafts.

FIG. 7.

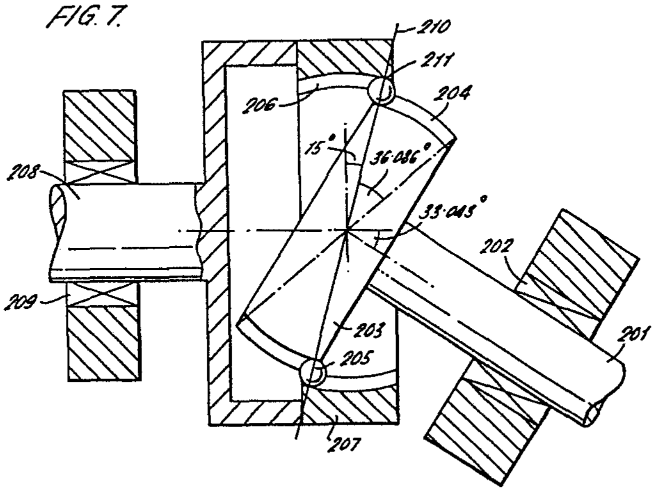


EP 0 078 168 A1

MOTION TRANSMITTING APPARATUS

This invention relates to motion transmitting apparatus which, in one form, may be used for transmitting rotary motion through a fixed angle and which, in another form may be used, for example in a swash plate pump or swash plate motor, for preventing rotation of a swashing element which is driven by a rotary input or drives a rotary output.

The swash plate pumps or motors, as will be explained later, in effect use the rotary motion coupling between a swash plate and a stator to prevent rotation of the swash plate whilst permitting swashing motion. It is convenient therefore to consider, in the first place, the coupling for transmission of rotary motion.

In the U.K.Application No.8128046 (Published U.K. Application No.2085994), there is described a form of motion transmitting device, which is, for convenience, called an Axial Wave Drive and which transmits rotary motion through an angle. In one aspect, such motion transmitting apparatus comprises a male member, a female member, swashing means and a plurality of freely rotatable meshing elements between part-spherical surfaces of the male and female members, the meshing elements engaging in an endless wavy guide, e.g. a groove in a part-spherical surface of at least one of said members, which guide is arranged so that relative swashing motion of the male and female members causes the meshing elements to precesss along the wavy guide , whereby torque is transmissible between said members through said meshing elements, said meshing elements being freely rotatable in the other member or in rolling engagement therewith.

The meshing elements are preferably balls and, in this case, said wavy guide has a number of waves which differ by unity from a multiple of four.

In the aforementioned specification, it is explained that an axial wave drive may be a simplex device having an endless wavy guide on one of the members and having a plurality of separate arcuate guides, e.g. grooves, on the other member, the number of arcuate guides differing from the number of waves in the wavy guide , or it may be a compound construction having endless wavy guides on both members with the number of waves on the two guides differing. Such devices provide a non-unity speed ratio between an input driving one member and an output from the other member. The present invention is concerned with devices analogous in some respects to the compound construction.

It is convenient to consider more particularly an axial wave drive with one endless guide on each member but, as explained in the aforementioned specification, a plurality of such guides may be provided on each member.

The present invention is concerned with improvements to axial wave drives. In one of its forms, the present invention provides a modification of an axial wave drive which has unity ratio between the input and output speeds. The present specification also describes a new and improved way of ensuring pure rolling motion between the elements of an axial wave drive unit, which technique, although finding particular application in a unity ratio axial wave drive, is applicable more generally to axial wave drives having ratios other than unity.

According to one aspect of the present invention, a motion transmitting apparatus comprises a male member, a female member, and a plurality of freely rotatable meshing elements between the surfaces of the male and female members, the meshing elements engaging in two endless wavy guides imposed upon two-part spherical surfaces of said male and female members, both said wavy guides having the same number of waves, said guides being arranged so that relative swashing motion of the male and female members causes the meshing elements to precess along both wavy guides in the same direction at the same speed relative to both elements, thereby causing both elements to remain rotationally locked to each other and being capable of only said relative swashing motion to each other. The guides conveniently are grooves but other forms of guide may be employed, e.g.slots.

The meshing elements are freely rotatable. They roll in the endless guides and are preferably balls but other constructions may be employed, e.g. spindles rotatable in bearings supported in the female element. The number of balls (or more strictly ball stations since omission of one or a few balls will not prevent the device operating) has to be an even number n. The wavy grooves have each a number of waves which differ by unity from said even number i.e. there are (n + 1) or (n - 1) waves.

In the aforementioned Application No.8128046, the Axial Wave Drive speed changing or torque conversion system may use either a known form of coupling or a second stage Axial Wave Drive to bring the drive back to a coaxial centre to an output shaft which is concentric with the input shaft. Also explained in that specification the limitations of one known form of coupling were explained together with reasons why it was better to bring the drive back to a coaxial centre with a second Axial Wave Drive unit. This disadvantage of using this second Axial Wave Drive unit is that it multiplies or divides the speed of the first unit which may well not be desired.

The present invention can provide a fixed angle, fixed ratio of one to one drive, i.e. the ratio of the input speed and output speed is unity. This drive can be used as the above-mentioned second unit. It can also be used as a coupling to anchor a swashing element to a stator or to connect a swashing and rotating element to a rotatable drive shaft.

It is known to construct variable angle constant velocity (CV) joints making use of balls between two spherical members but, in such joints, the balls are in arcuate grooves and the balls must swash at half the angle of the joint since this is the only angle at which the balls can track along great circle grooves. In the fixed angle coupling of the present invention, this limitation in the choice of the angle of swash of the balls does not apply and, as will now be explained, it is preferred to make the angle of swash of the median line of the balls relative to the male element more than half the deflection angle of the joint.

In a fixed angle unity ratio coupling of the present invention, input and output shafts, one on the male member and the other on the female member, may be supported in the required angular positions and the balls will, while staying in the grooves or other guides, be inherently constrained to move in a plane which may be called the swashing plane since the balls swash with respect to both the input and the output shafts.

As will be described later, in some forms of coupling, one of the male or female members may be constrained to swash by swashing means; for example, the swashing means may be driven by the input (or may drive the output), the other of the male or female members may be fixed and the output taken from (or the input applied to) said one of the members, e.g. through an axial wave drive unit as described in the aforementioned specification.

In considering the present invention, it is important to understand what is meant by "swashing means" and "swash". "Swashing means" is used in the present specification to refer to the device which causes one element, normally the male element, to swash; this device may take a number of forms, e.g. an axial cam. The element which is swashed, referred to as the swashing element or as a swash plate, is an element in which any point remote from a polar axis moves with three degrees of freedom of linear motion even when the element is not rotating but is being swashed. Considering a swashing but non-rotating sphere, the path of a point on the sphere with reference to a fixed datum point will vary from a circle, if the fixed datum point is on the axis of swash, to an elongate lemniscate (figure of eight) for a datum point on a line at right angles to the axis of swash. It is convenient to refer to such a sphere as having an axis (the axis of swash) and an equator extending around the sphere in a plane at right angles to the axis. When the element is swashed, any point on the equator follows the path of a lemniscate imposed on the surface of the sphere. Any point on the sphere between the axis and the equator will likewise have a motion which is a lemniscate imposed on a spherical surface. When the point is on the equator, the two loops of the lemniscate are equal, but as the point departs from the equator and approaches a pole, one loop becomes progressively larger and the other loop progressively smaller until the pole is reached, at which point the smaller loop disappears and the larger loop becomes a circle. Much more generally, whatever the physical shape of the swashing element, any point on a swashing element (not on the axis) will have this motion. This path is the resultant of three degrees of freedom of linear motion.

A preferred form of the fixed angle unity ratio coupling will now be described.

A part-spherical male member is connected to an input shaft. Said part-spherical male member has a circumferential wavy groove on it having ($n$ + 1) or ($n$ - 1) waves, where $n$ is an even number, e.g. having nine waves. There is a part-spherical female member connected to an output shaft also having a circumferential wavy groove on its inner surface having the same number of waves, e.g. nine waves. This second member embraces the first member and the input and output shafts are inclined at a predetermined angle to each other, as also therefore are the part-spherical male and female members. Between the part-spherical surfaces of the male and female members a ball is disposed at each of the crossing points of each set of waves of the two circumferential wavy grooves so that there are eight balls (assuming nine waves). As previously mentioned, the device will still be operative even if one or possibly more of the balls are omitted.

As the input shaft is rotated, the output shaft rotates at the same speed each being connected to the other by the male and female members through the eight balls. For every revolution of the male member the eight balls will precess one ninth of a revolution relative to the male member. For every revolution of the female member the eight balls will precess one ninth of a revolution relative to the female member. Both the relative precessions take place in the same direction. Therefore the speed of the input and output shafts will be the same. The device is thus a unity ratio coupling with the input and output shafts inclined at an angle to one another. The balls lie in a plane which swashes with respect to both the input and the output.

In order to keep the eight balls tracking on a median line, a cage with slots may be inserted between the male and female members but such a cage is not essential as the plane of the balls is defined by the crossing points of the grooves on the male and female members. The cage, in a unity ratio coupling can be rotated with the balls as they precess or may have a continuous slot to permit precession of the balls.

As has been described in the aforementioned Application No.8128046, it is important to obtain pure rolling motion between the balls and the grooves in order to obtain high efficiency. In the above-described device if the angle of swash of the median line of the balls relative to the male member is the same as the angle relative to the female member, pure rolling motion will not be possible. This is because the points of rolling contact of the balls in the guide, e.g. groove or slot, in the female member are radially further out than the points of contact of the balls in the guide of the male member. Because of this the rolling distances of the balls relative to the male and female members will not be the same.

Since the number of waves in the male and female members are the same, the flank angle to the waves will be the same and so no form of compensation in the respective rolling distances can be obtained in any of the manners described for a compound Axial Wave Drive in the aforementioned application.

If pure rolling motion is to be achived, an alternative method of compensation must be used. This is done by making the swash angle of the median line of the balls relative to the male member more than half the deflection angle of the male and female members relative to each other and the swash angle of the median line of the balls and less than half the angle of deflection of the male and female members relative to the female member. With the correct apportionment of angles between the two it becomes possible to equate the rolling distances on the flanks of the two sets of waves and their circumferential amplitudes also become equal even though one set is radially further out than the other.

The circumferential amplitude of such a wavy guide may be defined as follows:- The wavy guide extends around a sphere and thus one may draw two circles (analogous to circles of latitude on the earth's surface) one passing through the peaks of the waves and the other passing through the lowest points of the troughs of the waves. Since all the waves are of equal amplitude, these circles are parallel in the sense that circles of latitude are parallel to one another. The circumferential amplitude mentioned above is the shortest distance, measured over the surface of the sphere between the two circles. The rolling distances which are to be equated and which are the actual path lengths over the surface of the sphere along the grooves can be equated by appropriate choice of the amplitudes.

The waves on the two part-spherical members may be generated on a three dimensional drafting machine such as is described in the aforementioned specification.

A preferred method of generating the described wave form with the drafting machine for this coupling is as follows:-

This machine has a stylus marking the wave on a part sphere. If the stylus is kept stationary and the part sphere is swashed by an angle which has been predetermined by appropriate setting of the machine, which angle represents the swash angle of the median line of the balls relative to the male member and if the part sphere is rotated at the correct speed to obtain the desired number of waves, and if the same operation is done with the female member except that a new angle of swash is selected, namely the predetermined angle of swash of the median line of the balls relative to the female member this will result in two correct wave forms which will have had their rolling distances equated because of the choice of the two different swash angles.

At first glance this would appear to provide the incorrect wave form since it was explained in the previous application that a wave would be generated in this manner only if spindles and not balls were used. However since waves are being put on both the male and female members in the construction of the present invention and since both members are being swashed relative to the ball (i.e. the stylus of the drafting machine) the overall result is equivalent to the ball staying still, as a spindle does in a coupling using the spindles fixed in one of the members.

The waves will not be pure sine waves but will be re-entrant or obese as explained in the aforementioned earlier application, depending on the direction of rotation of the input shaft of the drafting machine relative to the sphere.

It should be realised that whenever a wave form is generated without oscillation of the stylus, even when there are waves on both the male and female, it is no longer necessary to have the number of balls (or, more specifically, ball stations) divisible by four. The number of ball stations only has to be even.

Reverting now to the description of one form of the present invention, the cage may be positively swashed at the predetermined angle of swash as described in the aforementioned application.

The invention thus also includes within its scope, a motion transmitting apparatus including

(a) swashing means

(b) meshing means in the form of a series of independently movable meshing elements whose centres are constrained to remain on the circumference of a swashing circle

(c) swash plate means formed with a first circumferential wavy guide on a part-spherical surface, said guide having a number of waves differing by unity from an even number, n, and said guide being partially complementary to said meshing elements

(d) a datum means formed with a second circumferential wavy guide on a part-spherical surface, the second guide having the same number of waves as said first circumferential wavy guide, said second guide being also partially complementary to said meshing elements,

wherein said swashing means is disposed to cause said meshing elements to precess around said first and second circumferential wavy guides in said swash plate means and in said datum means in the same direction at the same relative angular velocity, the centres of said individual meshing elements being constrained by said guides for movement in three degrees of freedom of linear motion relative to said datum means and said swash plate means, thereby preventing any relative rotational movement between said datum means and said swash plate means, but allowing relative swashing motion between them.

The meshing elements, (which are preferably balls), may be constrained by being located in a circumferential slot or slots in a circular cage. If the waveform is generated without oscillation of the stylus, the meshing elements, instead of being in a slot or slots in the cage, may be a running fit in circular holes in the cage.

An input shaft may drive one of said swash plate means and an output shaft may be driven by the other of said swash plate means and the input and output shafts may be constrained to lie at a fixed angle to one another, these shafts thereby constituting the swashing means providing relative swashing motion between the two swash plate means.

The swash plate means conveniently is a male part sphere and the aforesaid datum means may comprise a datum member which is a female part sphere incorporating said second circumferential wavy guide on its internal surface and having a plurality n of predetermined stations on a plane through the centre of swash at right angles to the axis of operation of the swashing plane, this plane being the mid point of the axial movement of any point on the swash plane, where n is an even number, said stations being evenly spaced around the centre of swash, any number or all of said stations being the site for a meshing element where said second circumferential wavy guide crosses over said first circumferential wavy guide on said swash plate means, each said meshing element being a ball partly recessed in said first and second circumferential wavy guide at the respective stations, said swash plate means being swashed by said swashing means, the number of waves on said first circumferential wavy guide and said second circumferential wavy guide being the same and both being (n - 1) or (n + 1), said balls being caused to precess around said circumferential wavy guides in the same direction in each guide by the swashing motion of said swash plate relative to said datum member and to said swash plate, said swash plate means thereby being locked rotationally relative to said datum member by the precessing balls.

For reasons to be explained later, said balls are preferably arranged to swash on a median line through an angle that is more than half the angle of swash of said swash plate means relative to said datum member. If a cage is provided to maintain said meshing elements on the path of a median line, this cage may be swashed by a second swashing means.

There may be one wave more or one wave less than the number of ball stations, but the number of ball stations must be an even number. It is the number of ball stations and not the number of balls which must be even since the device will operate if one or a few balls are omitted. Preferably however a ball is provided at each ball station. The number of waves in the male and in the female members must always be the same. This number must always be odd. The wave form will be obese if there is one more wave than there are balls and re-entrant if there is one less. The balls will precess relative to the male and female members in the same direction. If there is one more wave than balls, the precession relative to both members will be in one direction, whereas if there is one wave less than there are balls, then the precession is in the opposite direction. In order to equate the instantaneous rolling velocities of the balls in the grooves of the male and female members, the radial distance of the balls from the centres of the members may be varied along their path of travel, as is described in the aforementioned specification. This equation of instantaneous rolling velocities is to be distinguished from the equation of rolling distances which is achieved, as previously described, by appropriate apportionment of the swashing angles.

This angle drive may be used in its own right as a fixed angle, unity ratio constant velocity drive, or in conjunction with an axial wave drive, e.g. where a second stage or some other form of coupling is used to bring the drive back to centre or to lock a swashing element to a stator.

By having two concentric units, the deflection angle may be doubled, or the two concentric units rotated about each other resulting in an infinitely variable deflection angle between the input and output shafts but still preserving unity ratio. The drive may also be used to compound the angle of an axial wave drive angle drive coupling.

As previously indicated, the unity ratio coupling described above may be arranged between a stator and the swash plate means to prevent the swash plate means from rotating whilst permitting swashing motion. This arrangement finds particular application to swash plate pumps and motors to avoid any necessity to rotate the piston and cylinder assembly.

The invention thus furthermore includes within its scope a motion transmitting apparatus including

(a) swash plate means formed with a first circumferential wavy guide on a part-spherical surface, said guide having an odd number of waves

(b) a stator formed with a second circumferential wavy guide on a part-spherical surface, the second guide having the same number of waves on said first circumferential wavy guide, the median planes of the two wavy guides being at an angle to one another,

(c) meshing means in the form of a series of independently movable meshing elements in rolling engagement with both said wavy guides and constrained by said guides to remain in a swashing plane at an angle intermediate the median planes of the two wavy guides

whereby said meshing elements permit swashing motion of the swash plate means relative to the stator but preventing rotation of the swash plate means relative to the stator.

As in the previously described embodiments, the meshing elements are conveniently balls. Said swash plate means is a male part-sphere and said stator is a female part-sphere. The balls may be arranged to swash relative to the stator on a median line through an angle which is more than half the angle of swash of the swash plate means relative to said stator so as to equalise the rolling distances in the two guides..

For a pump, there may be provided an input shaft with swashing means for driving said swash plate means and at least one piston in a cylinder linearly driven by said swash plate means.

For a hydraulic motor, there may be provided a rotatable output shaft driven by said swash plate means and hydraulically operated piston and cylinder means arranged for effecting swashing motion of said swash plate means. Said output shaft may be coupled to said swash plate means to rotate at the speed of swash of said swash plate means. An axial wave drive unit may be provided as a coupling driving said output shaft from said swash plate means.

In the following description, reference will be made to the accompanying drawings in which:-

Figure 1 is a schematic representation of grooves in a female stator and male stator of one embodiment of the invention;

Figures 2a, 2b, 3, 4a, 4b, 5a, 5b, 5c, 6a and 6b are explanatory diagrams showing how grooves are shaped to equalise rolling distances;

Figure 7 is a diagrammatic sectional elevation of a unity ratio fixed angle coupling;

Figure 8 is a diagrammatic representation of a coupling similar to that of Figure 7 except that a support housing and bearings for input and output shafts are inside instead of outside the coupling;

Figure 9 is a diagrammatic representation of yet another construction of unity ratio fixed angle coupling;

Figures 10 and 11 are diagrams illustrating yet further embodiments of the invention;

Figure 12 shows a unity ratio fixed angle coupling in combination with an axial wave drive unit;

Figures 13 and 14 illustrate swash plate motors embodying the invention;

Figure 15 illustrates a two-stage device with different angles of swash for the two stages;

Figure 16 illustrates the use of more than one wavy guide on each member of a coupling;

Figure 17 is a diagram illustrating different forms of guides for use in the motion transmitting apparatus;

and

Figure 18 is a diagram showing how the depth of opposing grooves in male and female members may be varied to reduce the difference in rolling velocity in the two grooves.

In referring to Figure 1, it is convenient to describe the female member as the stator and the male member as the rotor. The internal surface of the female member is a part-spherical surface with an endless wavy groove extending, in this embodiment, circumferentially with the waves extending each side equally of a diametral plane. The male member is also part-spherical with a similar endless wavy groove on its external surfaces.

In Figure 1, the zig-zag line 101 represents this circumferential groove on the male member and has, in this embodiment, nine waves. The nine waves are of equal amplitude. The number of waves must always be an odd number and it is convenient to consider this number as (n + 1) or (n - 1) where n is an even number.

The female member has an endless wavy groove with the same number of waves as are used on the male member. This groove is represented by the zig-zag line 102. In the figure, this has been delineated in two planes (to the left and to the right respectively of axis AB), each representing 180° of arc around the number. These are shown at the inclined axes BC and $BC^1$. The inclination of axis BC represents the inclination of the axis of the output shaft which, in this embodiment, is on the female member. The axis of the input shaft is AB which shaft is connected to the male member. In the fixed angle unity ratio couplings of the present invention, the input and output can be interchanged but, for convenience, the male member will be referred to as the input element.

The angle ABE represents the relative angle of swash of the male member to the female member. Engaging the two grooves are $\underline{n}$ balls which constitute meshing elements but which roll along the grooves. The balls 103 represent the eight balls in this embodiment. They lie on a swashing median line 104. The balls 103 are at the intersection points of the two sets of nine waves, represented at 101 and 102: these intersect at the median line 104 which is marked $DD^1$. There is no ball at $D^1$ since it is coincident with D.

It will at once be seen that the angle of swash FBD of the median line of the balls, being 24° in this embodiment is more than half the angle of swash of the female member to the male member, which angle is FBE and is only 41°. This determines the rolling distance along the wave flank 101.

The female member lies around the male member and thus the surface of the groove engaged by the balls on the female member is radially spaced outwardly from the surface of the groove in the male member.

The relative angle of swash of the median line 104 to the female member is the angle DBE, which is 17° and is obviously less than half the angle of swash FBE of 41° thus creating less rolling distance along the wave front 102. It is however not possible to show in this schematic drawing that the wave rolling contact line of the female member on the balls 103 is disposed radially outward from that of the rolling contact line of the male member, but, by the choice of swash angles, it is possible to equalise the respective rolling distances in a three dimensional coupling although this is not shown in the two dimensional nature of the drawing. One station is indicated at 105 of the alternative set of intersection points if n + 1 balls were used, i.e. ten balls in this example.

In further consideration of the form of the grooves, reference may be made to the aforementioned U.K. Application No.8128046 (Publication No.2085994) in which there is explained the disciplines controlling the various waveforms and the functions that affect their respective shapes. In the unity ratio, constant velocity, fixed angle coupling now being considered, the angle of swash of the median lines of the balls relative to the female member is different from the angle of swash of the median line of the balls relative to the male member in order to equate the rolling velocities of the balls relative to these two elements. It is important to understand why it is possible to achieve constant velocity with this type of coupling whereas with a conventional constant velocity (CV) variable angle drive the median line of the balls must bisect the angle between the male and female members which results in an inability to equate the rolling velocities of the balls, in this instance, between the male and female members.

Clearly, in a conventional C.V. coupling the grooves for the balls on the male and female members all have to be arcs of great circles; otherwise, when the angle of the joint varies, this in itself will cause a compound rotational motion between the male and female members causing non-constant velocity. Also it is apparent that as the male and the female members rotate at an angle to each other, one member is in fact swashing relative to the other.

In the abovementioned Application No.8128046 (Publication No.2085994), it is demonstrated that the only time that a swashing element will trace an arc of a great circle relative to a generating point is when the generating point oscillates in an arc which is half the angle of the angle of swash of the swashing element and with the plane of the oscillating arc disposed at right angles to the axis of swash of the swashing element.

Since as already stated in a conventional C.V. coupling the grooves for the balls on the male and female members are arcs of great circles, the generating points now being the balls, the swashing median line of the balls relative to the male and female swashing members must be half the angle of the disposition of these two members.

In the coupling of Figure 1 of the present specification, the median line of the balls does not bisect the angle of the coupling; this is done in order to equate the rolling velocities and is possible because both male and female members have wavy grooves, not arcuate grooves. It is shown in the aforementioned application that, as soon as the oscillation angle of the generating point for the groove departs from half that of the angle of swash, a lemniscate is formed, whose proportions are a function of the amount of this departure.

Consider first what happens if the coupling is rotated through half a revolution, in other words half a swash. Of the total coupling angle, assume 3/5 of the total angle is apportioned as the angle of median line of the balls relative to the female and 2/5 of the total angle is apportioned as the angle of the median line of the balls relative to the male. The path of the balls relative to the female member will be a half lemniscate trace as shown in Figure 2a. The path of the balls relative to the male member is also a half lemniscate trace as shown in Figure 2b but the amplitude of this trace in Figure 2b is much bigger than that of Figure 2a because the difference in relative angular motion between the male and the balls is much greater than the motion of the balls relative to the female.

Figure 3 is a diagram showing a ball 103 between surfaces 120, 121 on the male and female respectively. The angle of swash of the balls relative to the female is 2/5 $\theta$ if $\theta$ is the total angle of the joint and hence the arc of roll on the female is XY. The angle of swash relative to the male is 3/5 $\theta$ and the arc of roll is XZ. Since the rolling contact point of the ball relative to the female is radially further out from the geometric centre of the coupling from the rolling contact point of the ball relative to the female, their rolling distances can be equated by apportioning the angle of swash in accordance with the respective radii. Thus, as shown in Figure 4a, the two rolling distances on the two lemniscates can be equated. Figure 4b shows them superimposed on each other at the point of maximum deflection, with the centre of the ball at O. It will be appreciated that, to show paths on a sheet of paper, these paths must be drawn in one plane.

So far only a half revolution or a half swash has been considered. Further problems arise when a full revolution or several revolutions is considered. Figure 5a shows a ball groove wide enough to accommodate a ball as opposed to a trace of a half swash. Figure 5b shows the classic lemniscate generated as the result of a trace from one complete swash. Figure 5c shows what happens when that lemniscate is machined to form a ball track. Half the length of the wall on the "inner" side of each half lemniscate gets machined away by the width of the groove, so clearly the balls will not track correctly. This dilemma can be resolved in order to equate the rolling velocities of the balls relative to the male and female members by causing the balls to precess relative to both the male and female members at the same angular velocity, thus preserving the unity ratio and constant velocity of the device.

If the swash plate is now rotated as well as being swashed, the stylus still being kept stationary, the waveforms created by the half swashes previously referred to will then make up a continuous circumferential wave whose form will be obese or re-entrant, as explained in the aforementioned earlier application, depending on the direction of rotation of the input shaft of the drafting mechanism relative to the sphere. Figure 6a shows the half lemniscate which has now developed itself into a series of half lemniscates whose ends are connected to its neighbours to form a continuous circumferential wave of re-entrant form. Figure 6b shows these same half lemniscates whose ends in this instance are connected to their neighbours to form a circumferential wave of obese form. These Figures 6a and 6b represent one wave in the circumferential wavy groove of respectively an obese and a re-entrant waveform as explained in the aforementioned specification.

Thus, as long as the balls can travel along a groove in the same direction without reversing their rolling in the groove (always assuming the direction of rotation of the coupling is not changed), the swashing median line of the balls need not bisect the angle of the joint, and it is then possible to use this geometry to equate the rolling velocity of the ball relative to the male and female. This method of equating the rolling velocities can be applied to an axial wave drive unit where there is not unity ratio, that is, where the number of waves on the male and female members differ from each other.

Figure 7 is a sectional elevation of a fixed angle unity ratio coupling such as has been explained above. An input shaft 201 in a stator bearing 202 is attached to a part-spherical male member 203 in which circumferential wavy groove 204 has been cut with nine waves. This groove extends around a diametrical plane with the waves extending equally on either side of this plane. All the waves are similar and of equal amplitude. Eight balls 205 engage this groove and also engage a similar groove 206 cut in a part-spherical female member 207 which is attached to an output shaft 208 in a stator bearing 209. The two grooves 204, 206 have the same odd number of waves, nine in this instance, but the amplitudes of the two waves are chosen to equate the rolling distances of the balls in the grooves.

It can be seen in the drawing that the angle of swash of the swashing median line 210 of the balls 205, relative to the female member 207, is less than half the angle of deflection of the male member with respect to the female member. The angle of swash of the median line 210 of the balls is $\theta_1$ which might be for example 30°. The angle of swash of the male member relative to the median line of the balls is $\theta_2$, in this example 36.086°. The angle of swash of the male member relative to the female member is $(\frac{1}{2}\theta_1 + \frac{1}{2}.\theta_2)$, i.e. $(15^o + 18.043^o)$ which is $33.043^o$. This is less than $36.086^o$. More generally since $\theta_1$ is less than $\theta_2$ , the angle of swash of the swashing median line 210 relative to the male member will be more than half the angle of deflection of the male with respect to the female member. This makes the perpendicular amplitude of the waves on groove 204 greater than on groove 206. But because the waves on the groove 206 are disposed radially further outward to accommodate the balls 205 the rolling distances are equalised. Circles 211 indicate the contact point of the balls in the grooves.

Reference was made to the perpendicular amplitudes of the waves on grooves 204 and 206. The perpendicular amplitude of such a wavy groove may be defined as follows:- The wavy groove extends around a sphere and thus one may draw two circles (analogous to circles of latitude on the earth's surface) one passing through the peaks of the waves and the other passing through the lowest points of the troughs of the waves. Since all the waves are of equal amplitude, these circles are parallel in the sense that circles of latitude are parallel to one another. The perpendicular amplitude above is the shortest chordal distance between the two circles, i.e. along a straight line perpendicular to both circles and passing through the sphere from a point on one circle to the nearest point on the other circle.

The deflection angle of the male member with respect to the female member is the sum of half the swash angles of the median lines of the balls firstly to the male member and secondly to the female member.

As the input shaft 201 is rotated, the output shaft 208 will rotate at the same speed. The drive is through the balls. These balls however will precess by one ninth of a revolution relative to the male member for each revolution of the male member.

It will be noted that, in the arrangement of Figure 7, there is relative swashing motion between the male and female members. This swashing motion arises from the inclination of the input and output shafts and thus these shafts with their bearings inherently constitute a swashing means for effecting the required relative swashing motion between the male and female members.

It will be noted that in a unity ratio coupling as described above, having the same number of waves in the wavy grooves of the male and female members, and unlike an axial wave drive unit, there are two sets of crossing points forming the stations for the meshing elements. One set of balls in one set of these stations will precess in one direction for a given direction of rotation of the coupling. If balls were put in the other set of stations, the balls would precess in the opposite direction. Thus only one set of the stations can be used. The two sets of stations will differ in number by two, one set being an even number divisible by four and the other set being an even number not divisible by four. In a unity ratio coupling, the number of stations must be even. Either set of stations can be used in a unity ratio coupling since they will both be disposed on a swashing median line because of the manner in which the waves have been generated. In the case of an axial wave drive, where each wave has been generated by moving the stylus as well as the element, the number of stations has to be divisible by four for them to lie on a median line and thus only one set of stations can be used. The other set of crossing points, defining a number of stations which is even but not divisible by four, will not be disposed along a median line.

Figure 8 shows a unity ratio fixed angle drive coupling where a support housing and bearings for input and output shafts have been put inside the coupling instead of outside. This saves space yet still preserves the angular integrity of the drive. The bearings may be axial thrust bearings to absorb external axial loads imposed on the angle joint, in order to prevent the balls of the coupling having to take this additional load over and above the loads imposed upon them by the action of the coupling itself. Input shaft 310 is connected to a part-spherical male member 311 on which is cut a circumferential wavy groove 319. This groove meshes with balls 312 which also mesh with a circumferential wavy groove 313 in a part-spherical female member 314 which is connected to an output shaft 315. An angled stator shaft 316 is bearingly mounted on a roller bearing 317 internally on the input shaft 310 and the output shaft 315.

The operation of the coupling of Figure 8 is similar to that of Figure 7 and will not be described in detail. It provides a unity drive ratio. By the proper choice of the swash angle of the median line of the balls, pure rolling motion can be obtained.

The same method of generating the waveform can be used to generate the two sets of waves on a compound axial wave drive unit, say with nine waves on the female member, seven waves on the male member and eight balls as has been described for the preferred configuration for the unity ratio angle drive coupling. In this way there is a second method of obtaining compensation to achieve equal velocities of the balls over the surfaces of the two members. Firstly the different angles of the wave fronts on the male and female members can be employed as described in the aforementioned U.K.Application No.8128946 and secondly the different deflection angles of the swashing median line of the balls relative to the male and female members can be employed as described above.

So in Figure 7, if the coupling was an axial wave drive unit having a non-unity speed ratio, the wavy grooves on the male and female members would have differing numbers of waves. For example groove 206 would be a circumferential wavy groove with nine waves and on the female member groove 204 would be a circumferential wavy groove with seven waves.

As previously explained, when the waveform is generated without oscillation of the stylus, the number of ball stations has to be even and has to differ by unity from the number of waves on the waveform. When a waveform is generated by a stylus which is oscillated and the wave bearing element is simultaneously swashed and rotated, then the number of ball stations n must be divisible by four as explained in the aforementioned specification.

In that aforementioned specification, it has been described how the female element may be made in two parts and cut along the median line of the balls for ease of assembly. Instead, for ease of manufacture, it may be preferred to bisect the female member axially at right angles to its shaft, and, to facilitate assembly, a small detachable plug may be incorporated in a machined-away portion of the male member through which the balls may be inserted one at a time as the unit is swashed, each ball being inserted as the crests of the waves of the two circumferential wavy grooves coincide with one other at the maximum angle of swash and at the point where the metal forming the crest of each wave has been machined away..

Figure 9 shows this configuration. Stator female member 410 has a circumferential wavy groove 411 engaged by balls 412. These balls also engage a second circumferential wavy groove 413 in a swashing male member 414. The two grooves 411 and 413 have the same odd number of waves, the waves having amplitudes determined, as previously described, to equate the rolling distances of the balls along the grooves. A detachable plug 415 in the male member 414 is secured by a screw 416 into the male member 414. When the plug 415 is removed it becomes possible to insert balls 412 in succession into the circumferential wavy groove 413 as the male member 414 is swashed and rotated. A line 417 represents the bisecting assembly cut of female member 410. Tie bolts and nuts 418 hold the two parts of this member together.

Figure 10 shows a coupling in accordance with the present invention used in combination with an axial wave drive unit. An input shaft 501 drives swashing means 502 for effecting swashing motion of an annular member 503. This annular member 503 has a part-spherical internal surface 504 with a wavy groove 505 engaging balls 506, which balls also engage a wavy groove 507 in a male stator 508. The annular member 503 also has a part-spherical outer surface 509 with a wavy groove 510 engaging a plurality of balls 511, these balls also engaging in a plurality of separate arcuate grooves 512 in an outer female member 513. Member 513 is an output element and may, for example, be secured to an output shaft having its axis concentric with the axis of input shaft 501.

The members 503, 513 with the balls 511 and co-operating grooves form a simplex axial wave drive unit. Typically the wavy groove 510 might have nine waves and there might be eight balls 511 and eight arcuate grooves 512 to give a nine to one reduction ratio. The members 503, 508 and balls 506 form a fixed angle unity ratio coupling to make the input and output coaxial.

Figure 10 illustrates one combination of an axial wave drive with a fixed angle unity ratio coupling. Much more generally, in any multi-stage axial wave drive system, one or more of the axial wave drive stages may be replaced by a fixed angle unity ratio coupling.

A cage may be provided to constrain the balls to remain in the required swashing plane and such a cage may be positively restrained on its swashing plane relative to the male and female members by separate control means. However provided the grooves on the two members are formed so that they never become parallel and thus never form a tunnel down which the balls can run, the cage and cage drive are not essential because the balls are constrained by the wavy grooves to remain in this plane. In a unity ratio coupling, such a cage must rotate at the same speed and in the same direction as the balls precess or must alternatively have a continuous slot to permit precession of the balls.

Figure 11 illustrates a construction of unity ratio fixed angle coupling in which a cage is provided, the cage being positively swashed. A bearing 441 supports an input shaft 442 and a bearing 440 supports an output shaft 443. The coupling has a female element 444 and a male element 445 with balls 456 in a cage 446. A circumferential groove 449 in the cage is engaged by a roller 447 fixed on a shaft 450 which is bearingly mounted on a stator support 448. This roller 447 rolls in the groove 449 and thus keeps the cage in the required plane of swash of the balls. The male and female members each have a circumferential wavy groove 457 and 458 which grooves have the same odd numbers of waves and are engaged by the balls, as in the previously described couplings, to give a unity drive ratio between the input shaft 442 and output shaft 443. The amplitudes of the waves and the position of roller 447 are chosen to give the required plane of swash of the balls equating the rolling distances of the balls of the male and female members.

Figure 12 shows a speed changing device incorporating a unity ratio fixed angle coupling and an axial wave drive unit and having positive means for swashing a cage for the balls of the unity ratio coupling. For clarity, no cage has been shown for the balls of the axial wave drive unit. In Figure 12 an input shaft 561 swashes a swash plate 565 by means of a crank 566 and stub shaft 567 in a swash plate bearing 568. The swash plate 565 is a hermaphrodite element with a male outer part-spherical surface and a female inner part-spherical surface. The unity ratio coupling is formed by balls 569 which engage in a circumferential wavy groove 571 in a stator element 563 and also engage in a circumferential wavy groove 572 in the outer male part-spherical surface of swash plate 565. The two grooves 571, 572 have the same odd number of waves. A cage 576 maintains the balls 569 in a swashing median plane, the balls running in a slot in this case. The balls are also constrained to remain in this plane by the grooves 571 and 572 which have amplitudes determined, as previously described, to ensure equality of the rolling distances in the grooves 571, 572 on the elements 563, 565. The cage 576 has a circumferential groove 577 engaged by a roller disc 578 so that the cage is positively swashed at the required angle. This disc 578 is mounted in a bearing 579 on a stub shaft 580 which is fixedly attached to a support arm 575 fixedly carried on input shaft 561. A stop 581 retains the disc 578 on the shaft 580.

The axial wave drive unit has a male element 564 which is fixedly attached to an output shaft 562 and which has a circumferential wavy groove 573 engaging balls 570, which balls engage also arcuate grooves 574 on the inner female surface of swash plate 565.

The axial wave drive unit operates in the manner described in the aforementioned specification to give the required speed ratio between the swash plate 565 and the output shaft 562. The unity ratio coupling provides the drive between the input shaft 561 and the swash plate 565. As the roller disc 578 rotates about the axis of the input shaft 561 in a circular orbit maintained by arm 575, this disc 578 engages the cage 576 through groove 577 and causes this cage to be positively swashed.

As previously mentioned, the invention finds application to swash plate pumps and motors. In such an arrangement the swash plate can be prevented from rotation but permitted to swash by what is, in effect, a unity ratio coupling between a swash plate and a stator, i.e. a unity ratio coupling in which the input and output rotational speeds are zero.

Figure 13 shows a hydraulic motor of the swash plate type wherein hydraulic fluid from a pressurised fluid source enters through ports 600 into cylinders 601 in a cylinder block and stator 602. For clarity, no timing mechanism or valves for controlling the fluid flow into and out of the cylinders has been shown; these flow control components may be of conventional construction. The fluid drives pistons 603 which drive a swash plate 604 via connecting rods 605 which rods each extend between a ball and socket joint 606 in a piston and a ball and socket joint 607 in the swash plate 604.

Swash plate 604 swashes but is unable to rotate by reason of a unity ratio coupling formed by balls 609 in circumferential wavy grooves 611 and 612 formed respectively in a female part-spherical portion of the stator 602 and on a male part-spherical surface of the swash plate 604. The two grooves have the same odd number of waves and the two waves have amplitudes determined, as previously described, in accordance with the radii of the part-spherical surfaces so that the balls swash in a swashing plane such that they have equal rolling distances in the two grooves. The coupling ensures that the swash plate 604 can swash but is prevented from rotating. This swashing motion causes an output shaft 613 to rotate, the shaft 613 being driven by a stub shaft 614 on a crank arm 615 carried by shaft 613, the stub shaft engaging a bearing 616 in the swash plate 604. A cage (not shown) may be provided for balls 609 between the two part-spherical surfaces.

Figure 14 shows another hydraulic motor of the swash plate type in which, as in the motor of Figure 13, a unity ratio coupling is provided to permit a swash plate to swash without rotating but which additionally incorporates an axial wave drive unit to change the output speed. In the motor of Figure 14, hydraulic fluid from a pressurised fluid source enters through ports 700 into cylinders 701 in a cylinder block and stator 702. For clarity, no timing mechanism or valves for controlling fluid flow into or out of the cylinders has been shown; these flow control components may be of conventional construction. The fluid drives pistons 703 which drive a swash plate 704 via connecting rods 705, which rods each enter between a ball and socket joint 706 in a piston and a ball and socket joint 707 in the swash plate 704.

The swash plate 704 swashes but is unable to rotate by reason of a unity ratio coupling formed by balls 709 in circumferential wavy grooves 711 and 712 formed respectively in a female part-spherical portion of the stator 702 and on a male part-spherical surface of the swash plate 704. The swash plate 704 swashes about a centre point O, the swashing angle, as seen in the plane of the drawing being between the lines OA (representing the axis for the position of the swash plate shown in the drawing) and OB. The two grooves of the unity ratio coupling have the same odd number of waves, which waves have amplitudes determined, as previously described, in accordance with the radii of the part-spherical surfaces so that the balls 709 have equal rolling distances in the two grooves 711 and 712.

The operation of the motor of Figure 14, as thus far described, is similar to that of Figure 13. In Figure 14, however, the output rotation is taken from a female internal surface of swash plate 704 via an axial wave drive unit to an output shaft 720. This axial wave drive unit is formed by arcuate grooves 721 on the part-spherical surface of the swash plate 704, balls 722 and a circumferential wavy groove 723 on an output male part-spherical element 724 fixedly attached to the output shaft 720. This output shaft is supported in a bearing 725 in the cylinder block and stator 702. In the axial wave drive unit, the wavy groove 723 has a nunber of waves which differs by unity from a multiple of four. The arcuate grooves in the female surface of the swash plate are located on lines of longitude spaced apart by $\frac{360}{n}$ degrees where _n_ is said multiple of four. There may be _n_ balls 722 or fewer than _n_ balls provided they are on appropriate lines of longitude. As explained in the aforementioned application, such an axial wave drive unit will give a speed reduction in the drive to the output shaft 720. For clarity no cages have been shown for either the balls 709 or balls 722.

Figures 13 and 14 show swash plate motors but the drive mechanism from the swash plate to the output shaft in each case is reversible and thus the same constructions could be used as swash plate pumps provided appropriate valves and timing means (which may be conventional) are provided to control the flow of fluid into and out of the cylinders.

In a two-stage axial wave drive configuration where the two stages are either simplex or a combination of simplex and compound, or where one of the stages is a unity ratio coupling, in order to obtain a desired ratio, it may be necessary that in one of the axial wave drive stages, the circumferential wavy guide of a simplex configuration has to be imposed on the female member and not on the male member. This increases the problem of equating the rolling velocities of the sets of balls in each of the stages. In these circumstances, it becomes desirable for the angles of swash of the median lines of the two sets of balls to differ from one another. In this way the amplitudes of the waves in each stage can be designed to suit the particular rolling velocities peculiar to that stage. If cages for the balls are employed, the two cages would be independent; each cage would have its own angle of swash which is governed by the waveforms of that stage.

Figure 15 illustrates such a two-stage device. In this construction, a first stage has an input shaft 801 which is connected to a crank 806 with a bearing stud 807 running in roller bearings 808 in a part-spherical male/female element 805. The stud 807 is at an angle, in this case about 30°, to the axis of the input shaft 801 so that the stud causes the element 805 to perform a swashing motion when shaft 801 is rotated. This swashing action moves part-spherical element 805 between an outer female stator 803 and a rotating male element 804 which is connected to an output shaft. A circumferential wavy groove 813 on the output male element 804 and radial grooves 814 on the inside of the element 805 are engaged by balls 810. There is an even number of radial grooves 814, which number is divisible by four, and an odd number of waves, either one more or one less than the number of radial grooves, in the wavy groove 813. The number of balls 810 is equal to the number of grooves 814. The unit thus far described constitutes a first axial wave drive unit of the simplex type. A second unit is formed by a female stator 803 having radial grooves 811 in which balls 809 engage, these balls also engaging in the circumferential wavy groove 812 on the exterior of the part-spherical swashing male/female element 805. The number of radial grooves 811 is divisible by four and the number of waves in the wavy groove 812 and is either one more or one less than the number of grooves 811. The number of balls 809 is equal to the number of grooves 811. Since the female stator 803 is fixed and since the male/female element 805 can rotate relative to the stator 803, the male output element 804 and the input shaft 801, the drive ratio is a compound ratio of the ratios of the two stages. One of the stages may be a compound axial wave drive or a unity ratio coupling instead of the simplex axial wave drive described above.

In order to equalise the rolling distances of the balls in their various grooves, the angles of swash of the median lines of the two sets of balls differ. In Figure 15, the balls 809 and 810 are shown each at an extreme position and thus the dashed lines 815 and 816 indicate, with respect to the axis AA, the respective angles of swash.

The balls may be in cages which would adopt the appropriate angles of swash.

In the embodiments so far described, reference has been made only to a single wavy guide on each part-spherical surface. It is possible to have more than one such guide, thereby permitting of an increased number of balls and a corresponding increase in torque handling capacity. Such a construction is shown in Figure 16 where two asymmetric circumferential wavy grooves 905 are disposed on lesser circles of a swashing male element 901 which is a part sphere. This male element 901 constitutes a rotor. A female element 902 is the stator. There are, in this embodiment seven waves in each circumferential wavy groove 805 on the male element. Balls 904 are partially recessed in these grooves 905 and also in wavy grooves (not seen) around the female stator element 902 these female grooves having the same number of waves as in grooves 905 to form a unity ratio coupling. A cage 903 holds the balls 904 in two seys of slots disposed circumferentially around the cage 903. Dotted lines 907 represent the two swashing lesser circles on which the cage 903 causes the balls 904 to track. As previously explained the amplitudes of the waves on the male and female surfaces are chosen to equalise the rolling distances in the respective grooves.

In the preferred embodiments thus far described, the guides on the male and female surfaces have been referred to as grooves. Other constructions may be used, as illustrated in Figure 17 to form guide tracks in which the balls can roll. Figure 17(a) shows a groove 910 in a member 911 with a ball 912 rolling on the sides of the groove. In Figure 17(b), the bottom of the guide is open to form a slot, the ball 913 rolling on the side surfaces 914 of the slot. In Figure 17(c), the guide is formed of two elements 915 having surfaces on which a ball 916 rolls.

To equalise rolling distances, as explained above, the amplitudes of the waves and hence the swashing angles can be appropriately chosen. Furthermore, the depth at which the ball contacts the walls of the guides in the male and female members can be varied. The balls can thus be made to rise in one groove and fall in the opposing groove at any point in each swashing cycle. Thus, whilst in the symmetric configuration, the balls still stay at any instantaneous moment on a median line, they are continually moving radially in and out from the geometric swash centre of the swashing male member. A cage may be provided for the balls, as previously explained, and the thickness of the cage wall is sufficient to keep the balls in their guides swashing in a true median line. Varying the cross-sectional profile of the grooves causes the balls to rise and fall in the grooves, thereby varying their instantaneous precession rate. This is illustrated in Figure 18 which shows three examples of the condition just described. In this figure, a swashing male member 921 is inside a female stator 922 with cages 923 between them with slots 924 for balls 925. The groove on the left in the female member in the figure is shallower than the opposing groove in the male member. The contact point in the female groove is shown at 926 which is at a shallower depth than the contact point in the male groove shown at 927. In the centre of Figure 18, the conditions are reversed, there being a deeper groove in the female member, where the contact point is at 928, this being deeper than the contact point 929 in the groove in the male member. At the right hand side of the figure, the contact points 930 and 931 in the female and male member groove are at about equal depths. It should be noted that the thickness of the cages 923 is sufficient that, even though the balls rise and fall in the grooves, they still present a full diameter across the slots 924 in the cage. Thus the cage can still keep the balls swashing on the true median line. The lines 932 in Figure 18 are the diametric lines along which the opposing reaction forces act through the balls from the flank of the groove on the female stator to the flank of the groove on the swashing male member.

CLAIMS:

1. A motion-transmitting apparatus comprising a male member, a female member, and a plurality of freely rotatable meshing elements between the surfaces of the male and female members, the meshing elements engaging in two endless wavy guides whose loci are imposed upon part-spherical surfaces of said male and female members, both said wavy guides having the same number of waves, said guides being arranged so that relative swashing motion of the male and female members causes the meshing elements to precess along both wavy guides in the same direction at the same speed relative to both elements, thereby causing both members to remain rotationally locked relative to each other and being capable of only said relative swashing motion to each other.

2. A motion transmitting apparatus as claimed in claim 1 wherein the meshing elements are balls.

3. A motion transmitting apparatus as claimed in either claim 1 or claim 2 wherein said guides are grooves.

4. A motion transmitting apparatus as claimed in either claim 1 or claim 2 wherein said guides are slots.

5. A motion transmitting apparatus as claimed in any of the preceding claims and arranged as a fixed angle coupling wherein there is an odd number of waves on each wavy guide.

6. A motion transmitting apparatus as claimed in claim 5 wherein there are n ball stations and (n + 1) or (n - 1) waves on each wavy guide..

7. A motion transmitting apparatus as claimed in any of the preceding claims and having an input shaft driving one of said male or female members and an output shaft driven by the other of said male and female members and wherein said input and output shafts are constrained to lie at a fixed angle to one another.

8. A motion transmitting apparatus as claimed in claim 7 and having a fixed angle support shaft bearingly mounted inside said input and output shafts.

9. A motion transmitting apparatus as claimed in claim 8 wherein said input and output shafts are mounted on said support shaft with sets of axial thrust bearings to resist external axial loads imposed on the coupling in either direction.

10. A motion transmitting apparatus as claimed in any of the preceding claims and arranged as a fixed angle coupling wherein the two wavy guides have waves of amplitudes and are located such that the meshing elements mesh in a median plane with the swash angle of the median plane relative to the male member being more than half the deflection angle of the axis of the male member with respect to the axis of the female member.

11. A motion transmitting apparatus as claimed in any of the preceding claims and having a plurality of said endless wavy guides asymmetrically disposed on each of said members, the waves of each endless wavy guide being circumferentially in phase with each other, the number of guides on each of the two members being the same and there being an equal number of sets of meshing elements, one for each co-operating pair of wavy guides.

12. A motion transmitting apparatus including
(a) swashing means
(b) meshing means in the form of a series of independently movable meshing elements whose centres are constrained to remain on the circumference of a swashing circle
(c) swash plate means formed with a first circumferential wavy guide on a part-spherical surface, said guide having a number of waves differing by unity from an even number _n_ and said guide being partially complementary to said meshing elements

(d) a datum means formed with a second circumferential wavy guide on a part-spherical surface, the second guide having the same number of waves as said first circumferential wavy guide, said second guide being also partially complementary to said meshing elements,

wherein said swashing means is disposed to cause said meshing elements to precess around said first and second circumferential wavy guides in said swash plate means and in said datum means in the same direction at the same relative angular velocity, the centres of said individual meshing elements being constrained by said guides for movement in three degrees of freedom of linear motion relative to said datum means and said swash plate means, thereby preventing any relative rotational movement between said datum means and said swash plate means, but allowing relative swashing motion between them.

13. A motion transmitting apparatus as claimed in claim 12 wherein said guides are grooves.

14. A motion transmitting apparatus as claimed in claim 12 wherein said guides are slots.

15. An apparatus as claimed in any of claims 12 to 14 wherein said meshing elements are freely rotatable balls.

16. An apparatus as claimed in claim 15 wherein said swash plate means is a male part-sphere and wherein said datum means comprises a datum member which is a female part-sphere incorporating said second circumferential wavy guide on its internal surface and having a plurality n of predetermined stations on a plane through the centre of swash at right angles to the axis of operation of the swashing plane, this plane being the mid point of the axial movement of any point on the swash plane, where n is an even number, said stations being evenly spaced around the centre of swash, any number or all of said stations being the site for a meshing element where said second circumferential wavy guide crosses over said first circumferential wavy guide on said swash plate means, each said meshing element being a ball partly recessed in said first and second circumferential wavy guide at the respective stations, said swash plate means being swashed by said swashing means, the number of waves on said first circumferential wavy guide and said second circumferential wavy guide being the same and both being (n - 1) or (n + 1), said balls being caused to precess around said circumferential wavy guides in the same direction in each guide by the swashing motion of said swash plate relative to said datum member and to said swash plate, said swash plate means thereby being locked rotationally relative to said datum member by the precessing balls.

17. An apparatus as claimed in claim 16 wherein said balls are arranged to swash on a median line through an angle that is more than half the angle of swash of said swash plate means relative to said datum member.

18. An apparatus as claimed in claim 16 wherein said balls are arranged to swash on a median line through an angle relative to said datum member which is less than half the angle of swash of said swash plate means relative to said datum member.

19. An apparatus as claimed in any of claims 12 to 18 and having a cage maintaining said meshing elements on the path of a median line.

20. An apparatus as claimed in either claim 17 or claim 18 wherein said cage is swashed by a second swashing means.

21. An apparatus as claimed in any of claims 12 ro 20 having an input shaft driving one of said male or female members, and having an output shaft driven by the other of said male or female members wherein said input and output shafts are constrained to lie at a fixed angle to one another, the input and output shafts thereby constituting said swashing means.

22. An apparatus as claimed in any of claims 12 to 21 having a plurality of circumferential wavy guides asymmetrically disposed about said swash plate means and said datum means, the waves of each circumferential wavy guide being circumferentially in phase with each other and wherein there is a similar number of sets of said meshing elements.

23. An apparatus as claimed in any of claims 12 to 22 wherein all the said meshing elements are arranged, when drivingly engaged, to roll between said datum means and said swash plate means.

24. An apparatus as claimed in any of claims 12 to 23 wherein said meshing elements can move radially inward or radially outward from the geometric swash centre of said swash plate means under controlled conditions and by predetermined amounts as said meshing elements precess about said circumferential wavy guides to reduce the difference in the rolling velocities of the balls in each guide relative to the other.

25. An apparatus as claimed in any of claims 12 to 24 wherein said even number n is a multiple of four.

26. An apparatus as claimed in claim 25 wherein the waveforms are each generated by a stylus which is oscillated co-operating with a wave bearing element which is simultaneously swashed and rotated.

27. An apparatus as claimed in any of claims 1 to 24 wherein the waveforms are each generated from a stationary marking point co-operating with a wave bearing member which is rotated and swashed simultaneously.

28. An apparatus as claimed in claim 27 wherein said meshing elements are in circular holes, providing a running fit for the balls, in a circular cage.

29. An apparatus as claimed in any of claims 1 to 27 wherein said meshing elements are in a circumferential slot or slots in a circular cage.

30. An apparatus as claimed in any of claims 12 to 29 and arranged as a fixed angle coupling with input and output shafts mounted in bearings arranged to take axial thrust loads.

31. A compound axial wave drive unit having a male member with a first wavy circumferential groove and balls each meshing with both guides, the number of waves on the guide on one member being (n + 1) and the number of waves on the guide on the other member being (n - 1) and wherein the balls are constrained to lie in a median swashing plane at an angle with respect to the female member which is less than half the angle of deflection of the male member with respect to the female member.

32. An axial wave drive unit as claimed in claim 31 wherein the angular position of said median swashing plane is chosen to make the path lengths of rolling of the balls in the male and female members equal.

33. A two-stage axial wave drive unit wherein the angle of swash of the median line of the balls of the first stage is different from the angle of swash of the median line of the balls of the second stage.

34. A motion transmitting apparatus as claimed in any of claims 1 to 30 and forming a unity ratio coupling, in combination with an axial wave drive unit wherein the angle of swash of the median line of the balls in

the axial wave drive unit is different from the angle of swash of the median line of the balls in the unity ratio coupling.

35. A motion transmitting apparatus having male swash plate means within female swash plate means, each swash plate means having an axis of swash and having a part-spherical surface on which is a circumferential wavy guide, the two guides having the same odd number of waves, the two axes intersecting at a predetermined angle and the two part-spherical surfaces having a common centre at the intersection of said axes of swash, an even number of meshing elements disposed in said circumferential wavy guides at the crossing points of the two guides so that the centres of the meshing elements are disposed in a plane which is stationary relative to planes through said common centre normal to said axes, and input means arranged for driving one of said swash plate means whereby said meshing elements precess relative to both circumferential guides in the same direction thereby driving the other of said swash plate means so that the two swash plate means rotate at the same angular velocity while points on the equators of the two swash plate means move relative to each other in three degrees of freedom of linear motion.

36 . A motion transmitting apparatus having a male swash plate means, a female swash plate means, each having a part-spherical surface, which surfaces are concentric about a centre at the intersection of the axes of swash of the two swash plate means, said axes being at a predetermined angle to one another, said part-spherical surfaces each having a circumferential wavy guide the two guides having the same odd number of waves, a plurality of independently movable meshing elements disposed in said circumferential guides at the n points where they cross on a common median line, the number of waves in the guides being (n - 1) or being (n + 1), and means for rotatably driving one of said swash plate means whereby the two swash plate means rotate about their respective axes at the same angular velocity with said meshing elements precessing relative to both said circumferential wavy guides in the same direction, each said male and female swash plate means swashing relative to said meshing elements whose centres lie in a plane stationary relative to planes normal to the two axes through said centre with points on the equators of said male and female swash plate means moving in three degrees of freedom of linear motion with respect to the centres of said meshing elements.

37. A motion transmitting apparatus as claimed in either claim 35 or claim 36 wherein said meshing elements are balls.

38. A motion transmitting apparatus as claimed in claim 37 wherein the angle between the plane normal to the axis of the female swash plate means through said centre and the plane of the balls is smaller than the angle between the plane normal to the axis of the male swash plate means through said centre and the plane of the balls, the two angles being proportional in accordance with the radii of the spherical surfaces of the male and female swash plate means whereby the rolling distance along the wavefront of the circumferential wavy guides on the female element is equal to the rolling distance along the wavefront of the circumferential wavy guide on the male swash plate means to ensure that the balls roll equally in the two guides without skidding.

39. The combination of a male stator member and a female swash plate means, the stator member and swash plate means each having part-spherical surfaces with a common centre and each having, on said part-spherical surfaces, a circumferential wavy guide, the two guides having the same odd number of waves, an even number, differing by unity from said odd number, of independently movable meshing elements disposed in said circumferential wavy guides where the two guides cross, whereby said independently movable meshing elements precess relative to said stator as the swash plate means is swashed so permitting swashing motion but preventing rotation of the swash plate means, and wherein the angle of swash of the plane formed by the centres of the meshing elements with respect to the male stator is larger than the angle between the plane through the centres of the meshing elements and normal to the axis of swashing motion of the female swash plate means, the angles being proportioned in accordance with the radii of the part-spherical surfaces so that the rolling distance along the wavefront of the circumferential wavy guide on the male stator member is equal to the rolling distance along the wavefront of the wavy guide on the female member, whereby the meshing elements have pure rolling motion on both members with the centres of said meshing elements moving in the three degrees of freedom of linear motion to lie always in a plane which has swashing motion relative to both the male and female members.

40. The combination of claim 39 wherein the meshing elements are balls.

41. Apparatus as claimed in any of claims 35 to 38 or the combination as claimed in either of claims 39 or 40 wherein the guides are grooves.

42. Apparatus as claimed in any of claims 35 to 38 or the combination as claimed in either claim 39 or 40 wherein the guides are slots.

43. Apparatus as claimed in any of claims 1 to 30 and comprising a unity ratio fixed angle motion transmitting device wherein the amplitude of the waves of the circumferential wavy guide on the male member is greater than the amplitude of the waves of the circumferential guide on the female member.

44. Apparatus as claimed in claim 43 wherein said waves on the part-spherical surfaces have shapes defined by generating means in which the male member is swashed and rotated relative to a stylus point and the female member is swashed and rotated relative to a stylus point, the angle of swash of the male member being greater than the angle of swash of the female member, these angles of swash being proportional in accordance with the respective radii of the part-spherical surfaces to equate the rolling distances on the respective wavefronts of the meshing elements.

45. A motion transmitting apparatus having two-stages, the first stage being an axial wave drive unit with a female stator and swashing member with independently movable meshing elements engaging a guide or guides on said female stator and engaging a guide or guides on a male surface of said swashing member and wherein said swashing member is a hermaphrodite having also a female surface which co-operates with a male member to form a second stage, the second stage being a unity ratio fixed angle coupling as claimed in any of claims 1 to 30, input and output drive shafts coupled, one to the first stage and one to the second stage, the second stage being arranged so that the input and output shafts are coaxial.

46. A motion transmitting apparatus including
(a) swash plate means formed with a first circumferential wavy guide on a part-spherical surface, said guide having an odd number of waves,
(b) a stator formed with a second circumferential wavy guide on a part-spherical surface, the second guide having the same number of waves as said first circumferential wavy guides, the median planes of the two wavy guides being at an angle to one another,
(c) meshing means in the form of a series of independently movable meshing elements in rolling engagement with both said wavy guides and constrained by said guides to remain in a swashing plane at an angle intermediate the median planes of the two wavy guides
whereby said meshing elements permit swashing motion of the swash plate means relative to the stator but preventing rotation of the swash plate means relative to the stator.

47. A motion transmitting apparatus as claimed in claim 46 wherein said meshing elements are balls.

48. A motion transmitting apparatus as claimed in either claim 46 or claim 47 wherein said swash plate means is a male part-sphere and said stator is a female part-sphere.

49. A motion transmitting apparatus as claimed in any of claims 46 to 48 wherein said balls are arranged to swash relative to the stator on a median line through an angle which is more than half the angle of swash of the swash plate means relative to said stator.

50. A motion transmitting apparatus as claimed in any of claims 46 to 49 and having an input shaft with swashing means for driving said swash plate means and having at least one piston in a cylinder linearly driven by said swash plate means.

51. A motion transmitting apparatus as claimed in any of claims 46 to 49 and having a rotatable output shaft driven by said swash plate means and having hydraulically operated piston and cylinder means arranged for effecting swashing motion of said swash plate means.

52. A motion transmitting apparatus as claimed in claim 51 wherein said output shaft is coupled to said swash plate means to rotate at the speed of swash of said swash plate means.

53. A motion transmitting apparatus as claimed in claim 51 and including an axial wave drive unit constituting a coupling driving said output shaft from said swash plate means.

54. A motion transmitting apparatus as claimed in any of claims 45 to 53 wherein said guides are grooves.

55. A motion transmitting apparatus as claimed in any of claims 45 to 53 wherein said guides are slots.

56. A motion transmitting apparatus comprising a male member with a part-spherical surface, a female member with a part-spherical surface, and a plurality of freely rotatable meshing elements between the part-spherical surfaces of the male and female members, the meshing elements engaging in two endless wavy guide paths formed respectively in the two part-spherical surfaces of said members for rolling movement along said guide paths, both said guide paths having the same number of waves and being arranged so that relative swashing motion of the male and female members causes the meshing elements to precess along both said paths in the same direction, thereby causing both members to remain rotationally locked relative to one another although capable of said relative swashing motion.

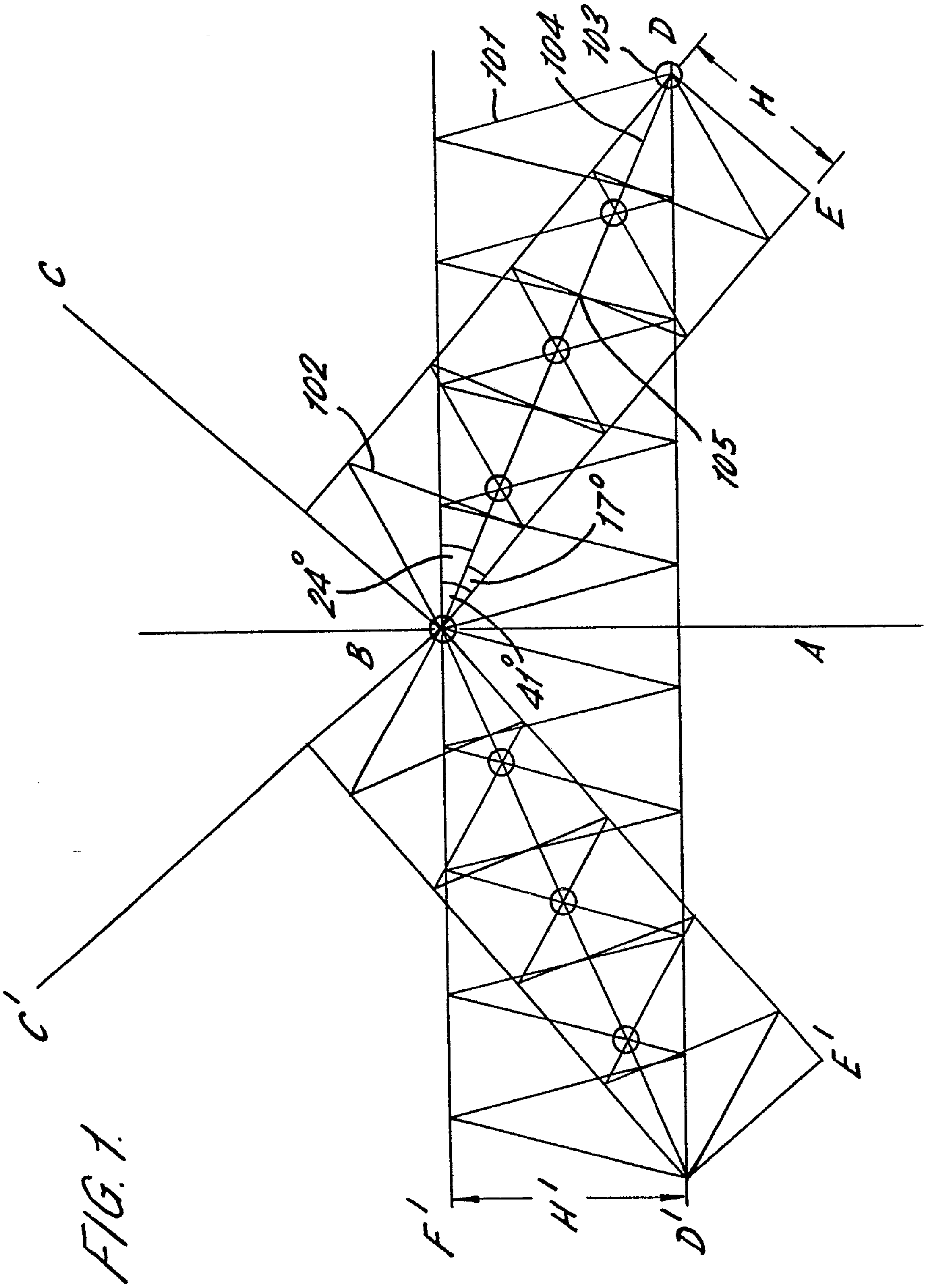


FIG. 1.

0078168

2/14

FIG. 2a.

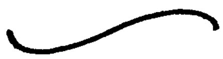

FIG. 2b.

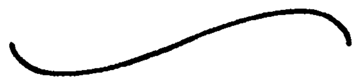

FIG. 3.

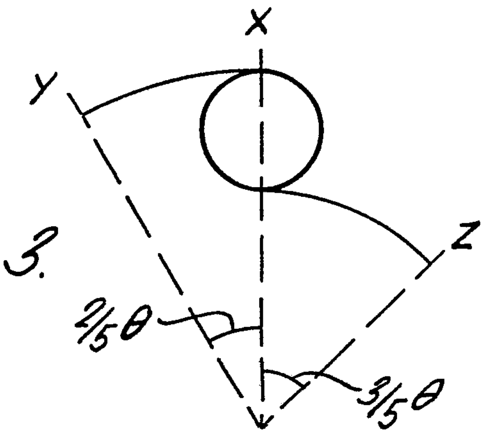


FIG. 4a.

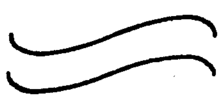

FIG. 4b.

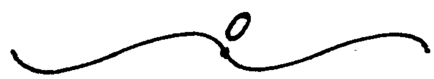

FIG. 5a.

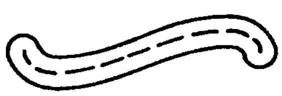

FIG. 5b.

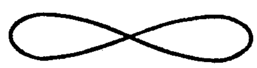

FIG. 5c.

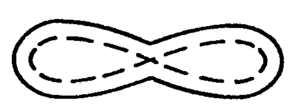

FIG. 6a.

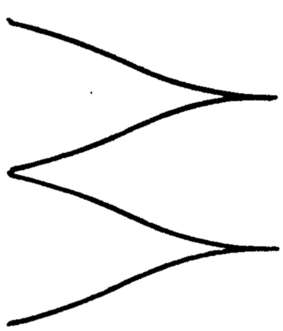

FIG. 6b.

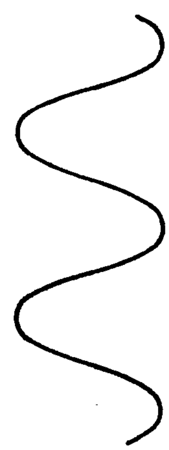

0078168



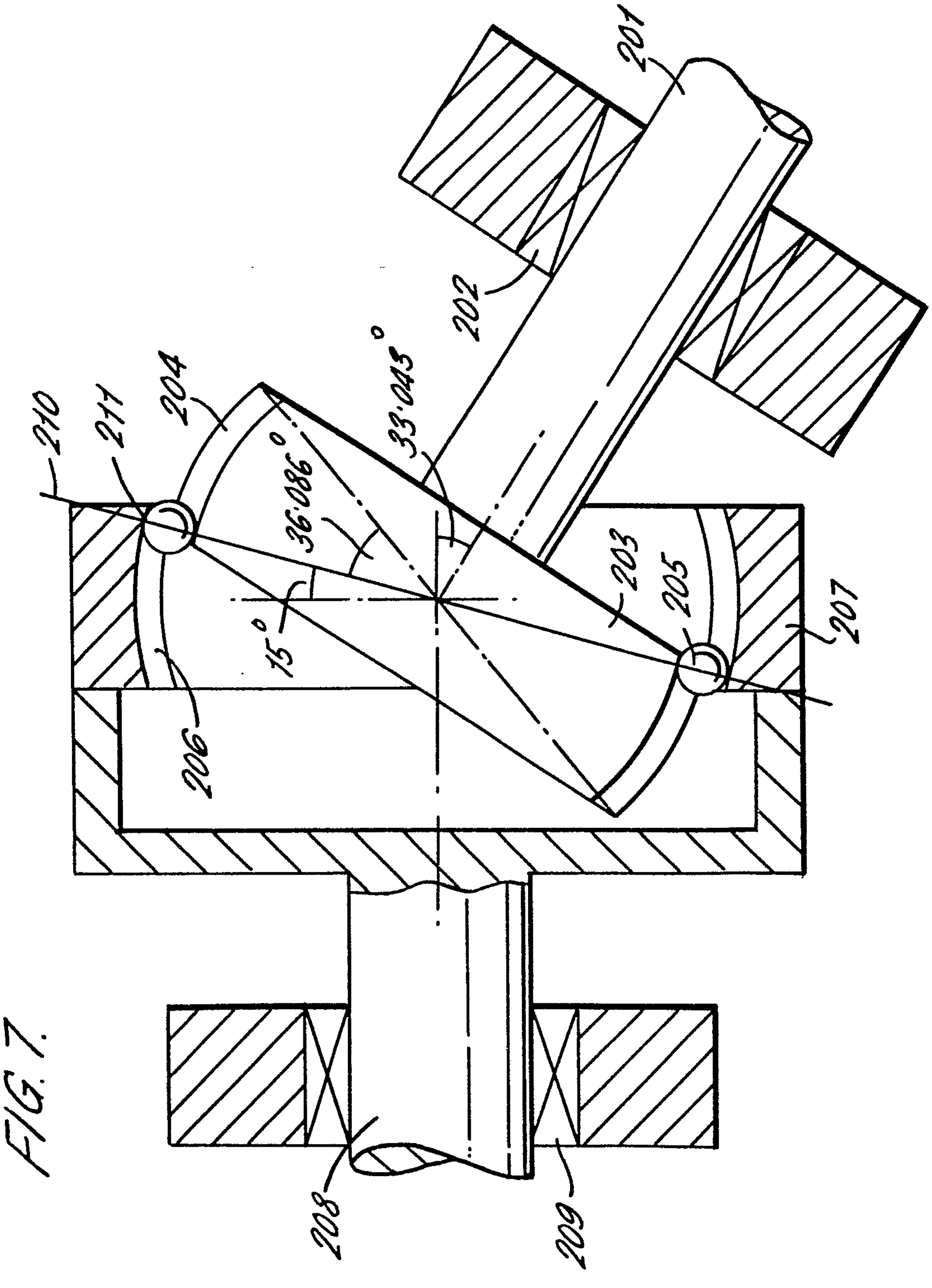


FIG. 7.

FIG. 8.

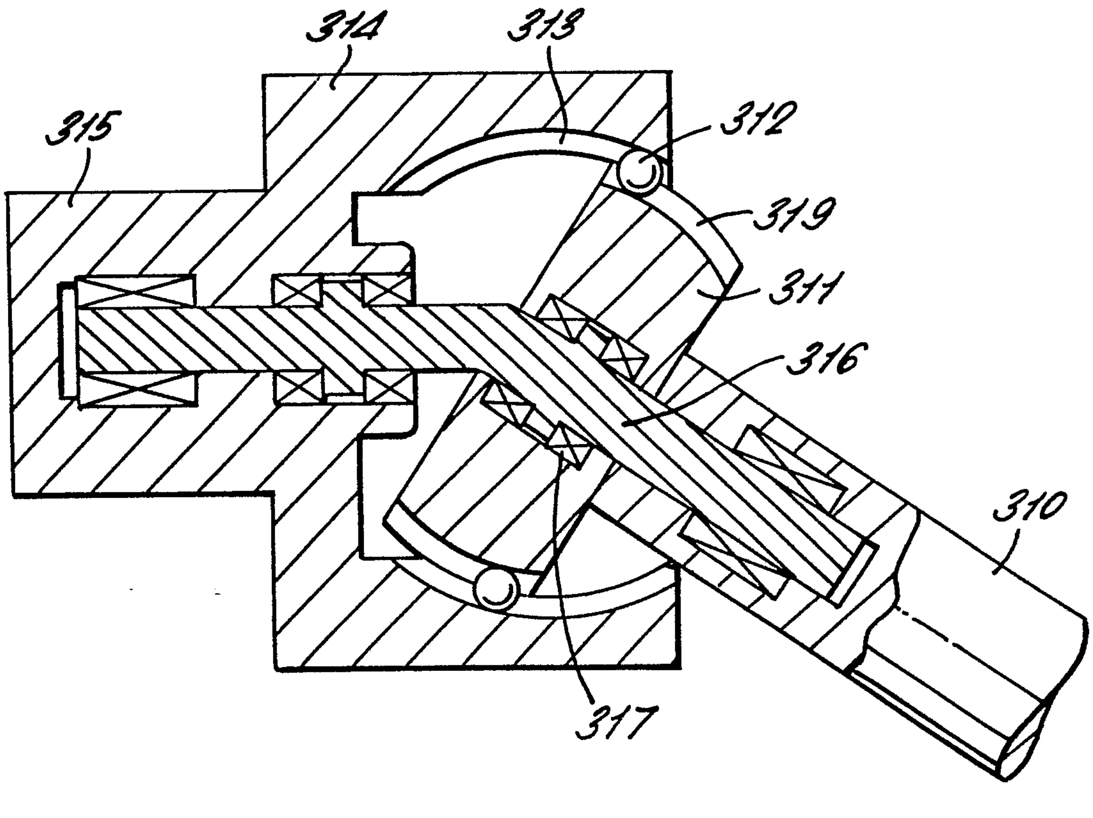

FIG. 9.

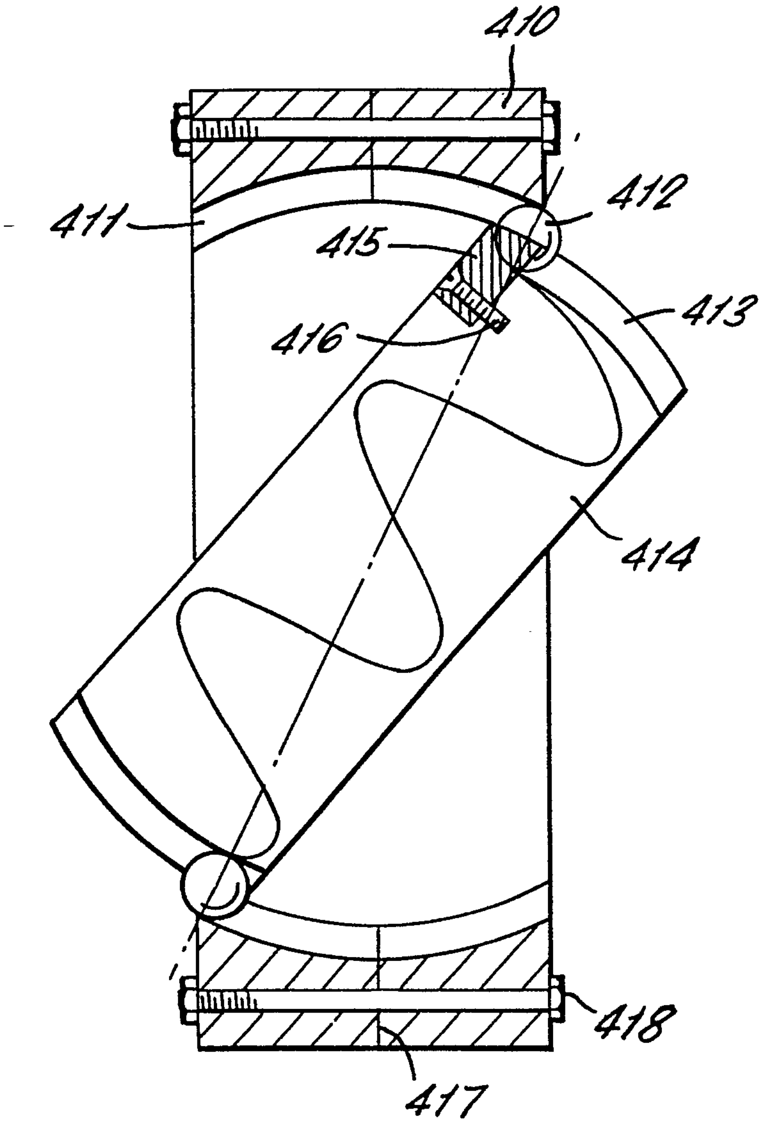

0078168

6/14

FIG. 10.

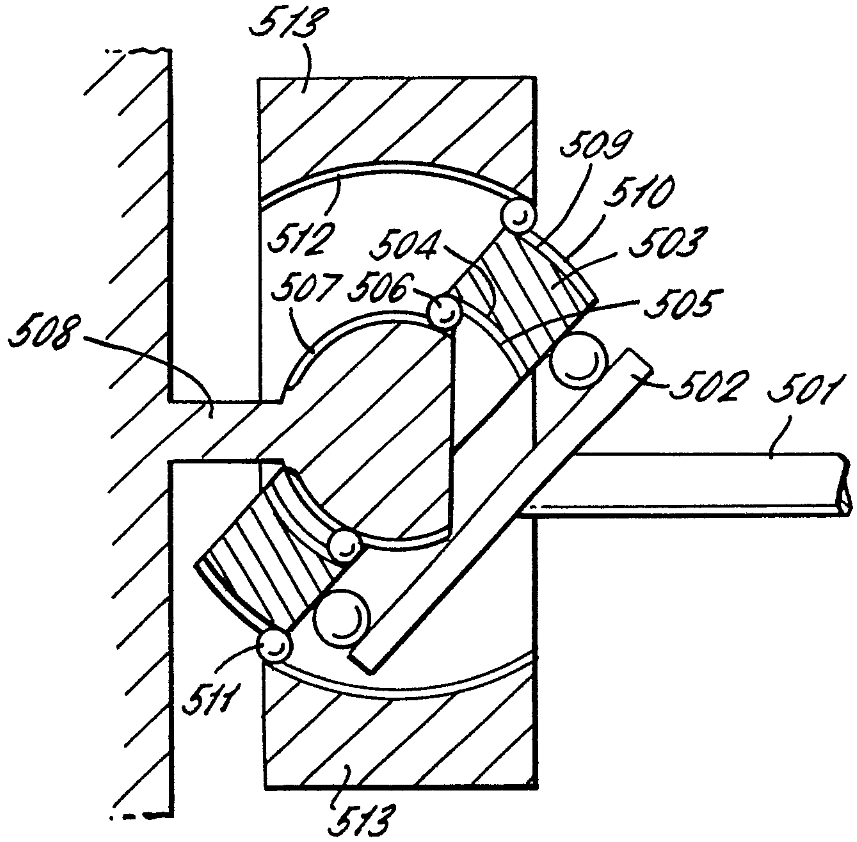

FIG. 11.

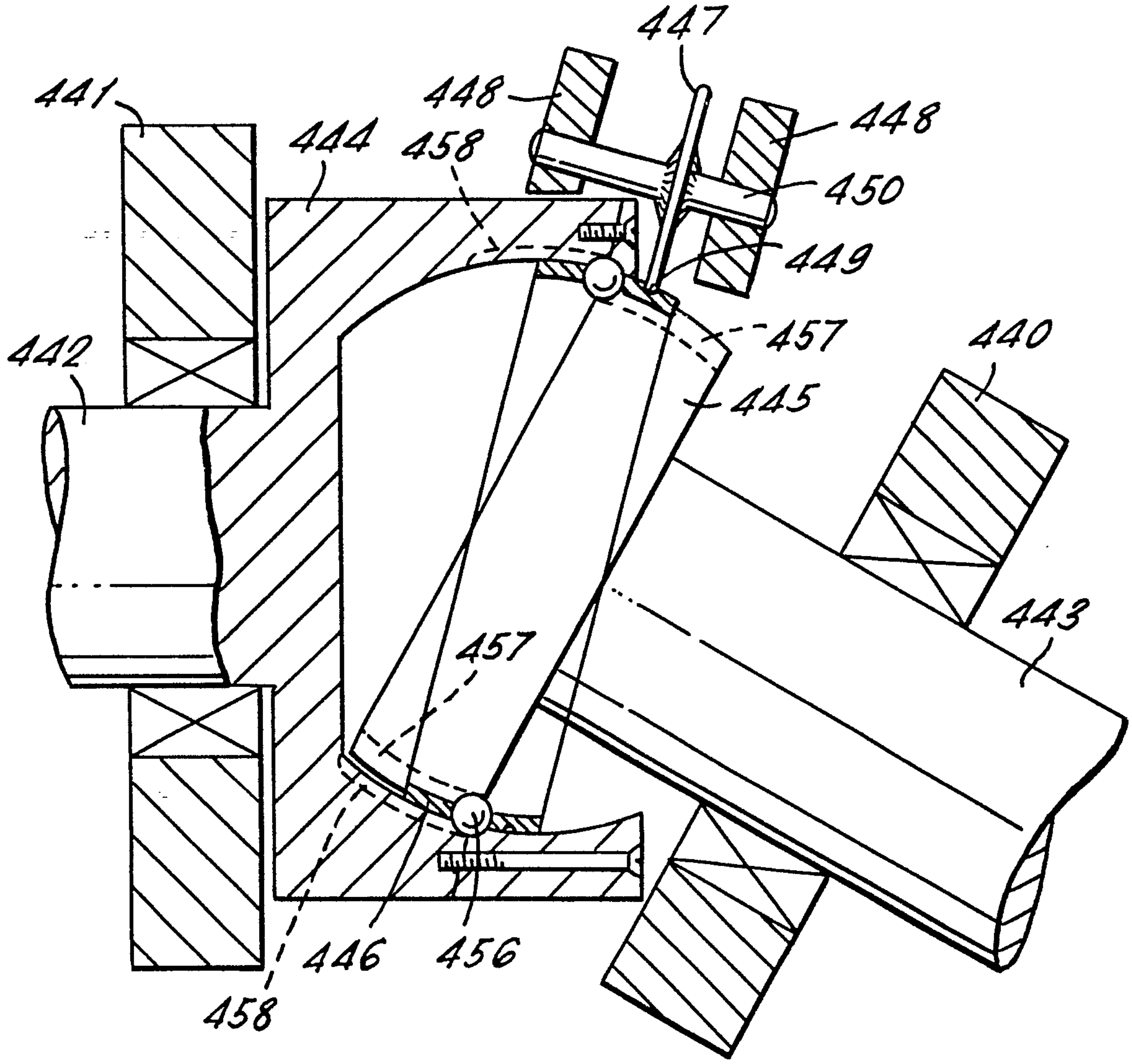

447
448
448
441
444
458
450
449
457
440
442
445
443
457
446
456
458

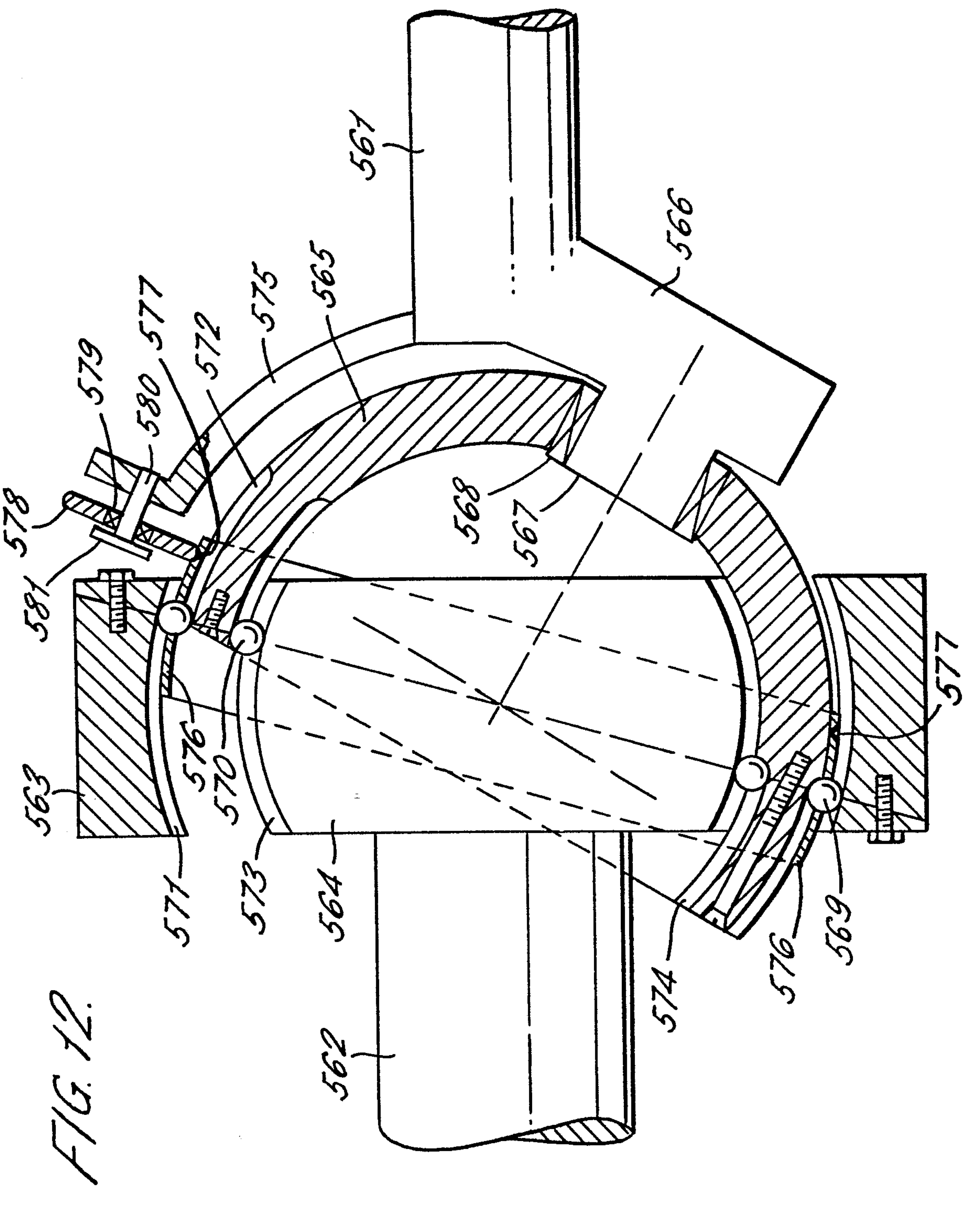
561
566
565
575
572
577
580
579
578
581
568
567
563
576
570
573
564
571
574
576
569
577
562

FIG. 12.

0078168

9/14

FIG. 13.

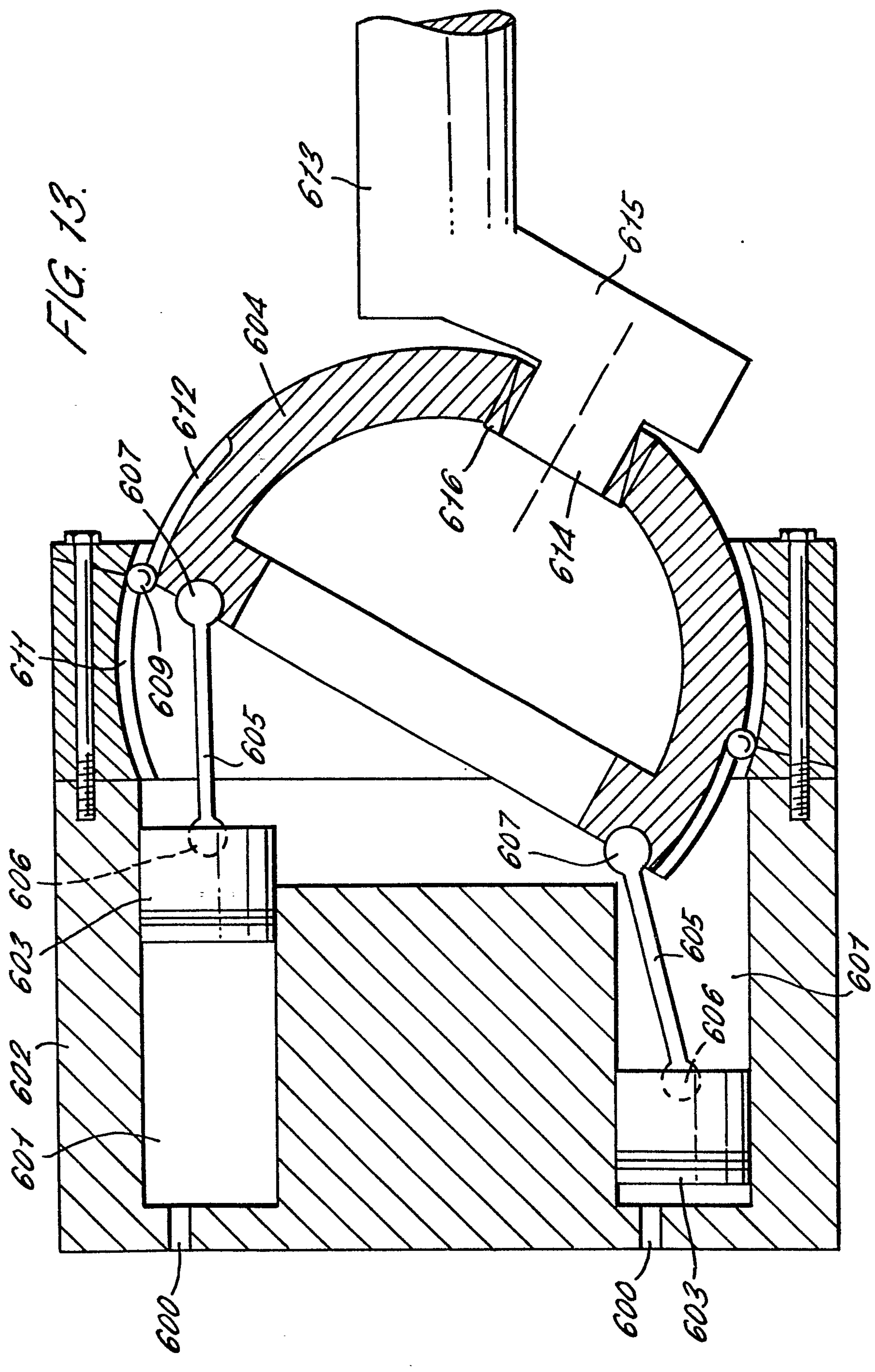

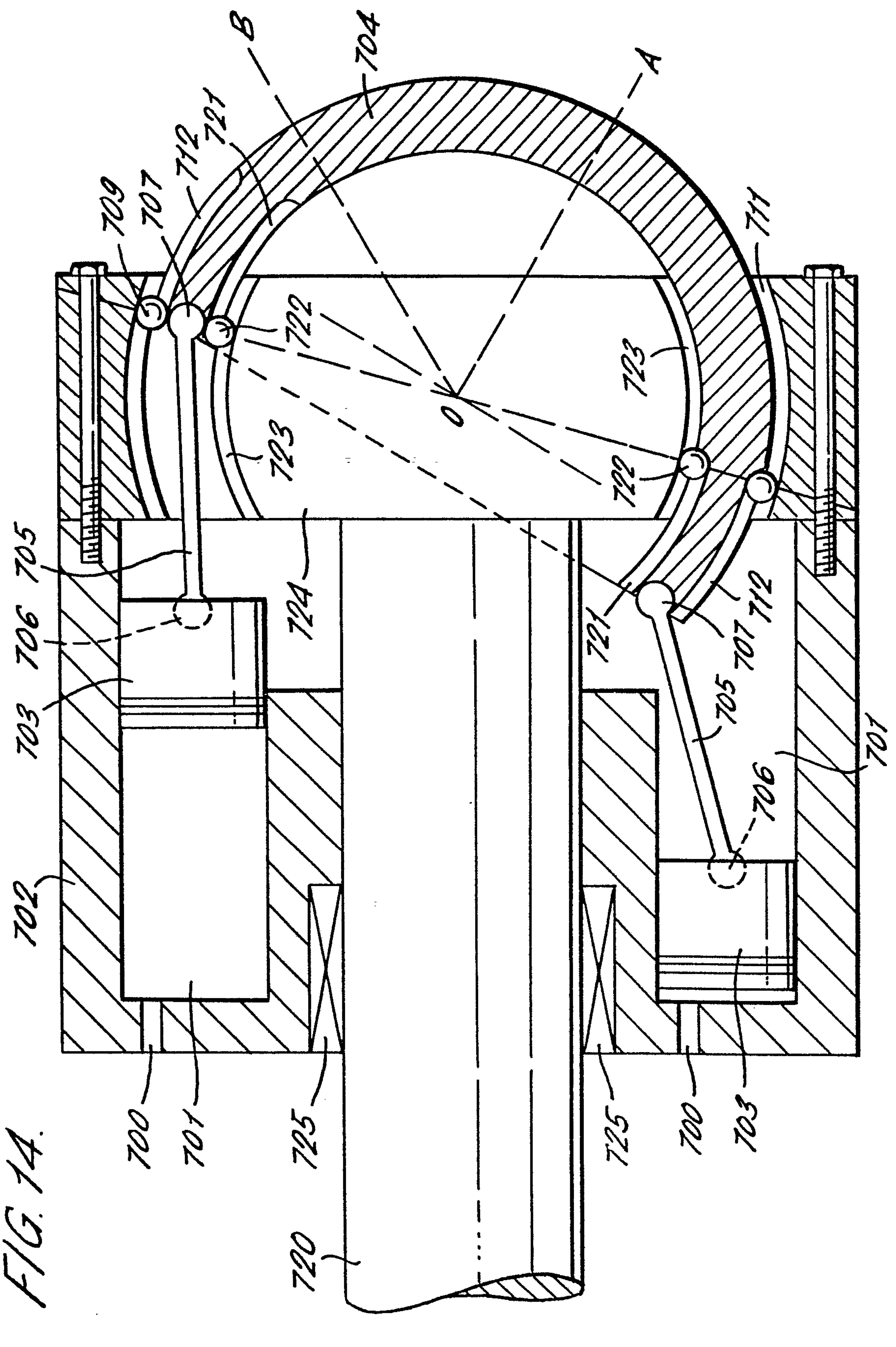
B
704
A
721
712
707
709
711
722
723
O
722
723
705
706
703
724
721
707
712
705
701
706
702
700
701
725
725
700
703
720

FIG. 14.

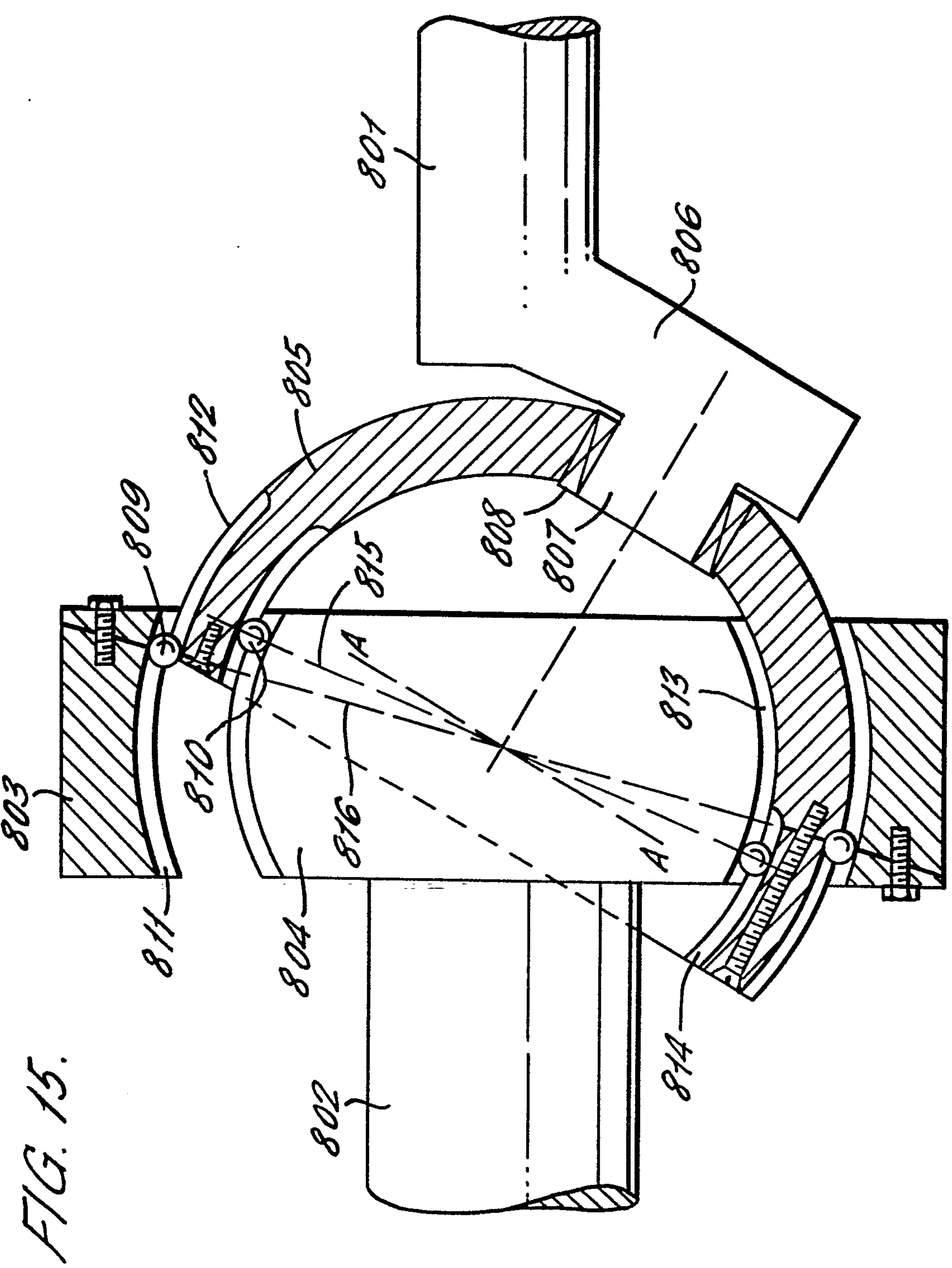
801
806
805
812
809
808
807
815
A
810
816
803
811
804
813
814
802
A

FIG. 15.

FIG. 16.

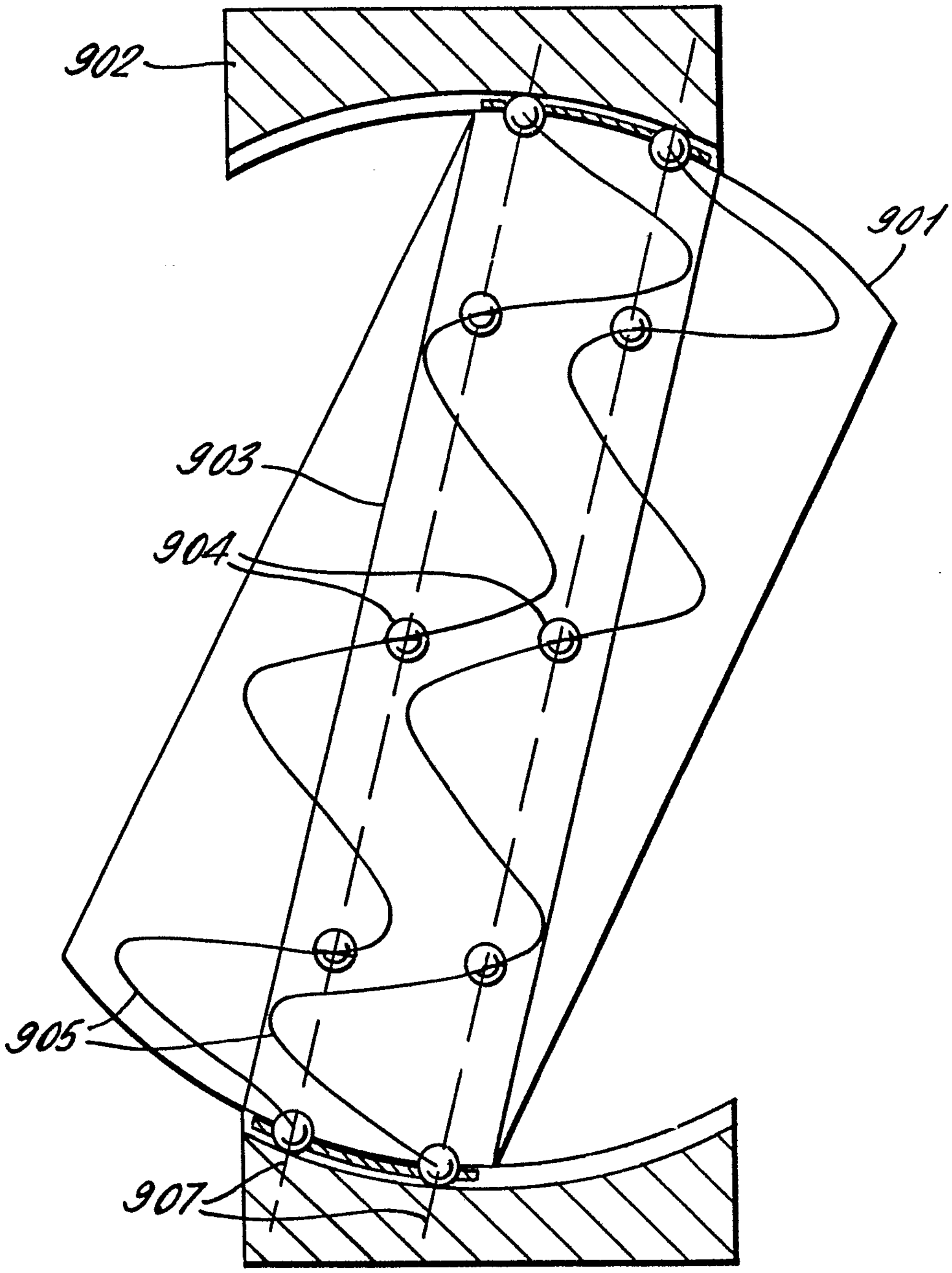

FIG. 17(a).

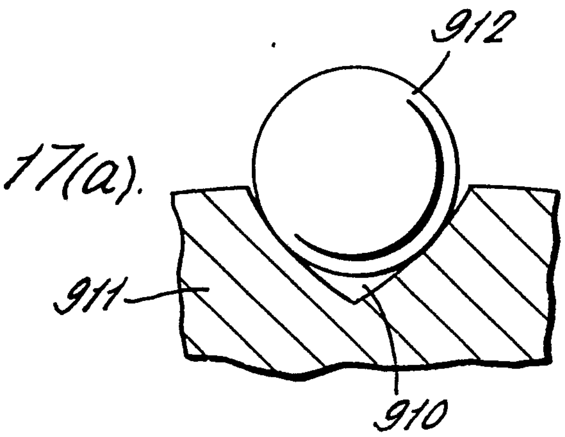


FIG. 17(b).

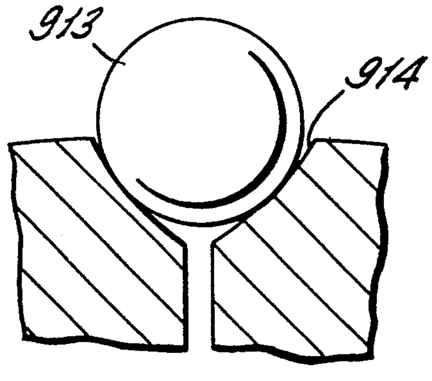


FIG. 17(c).

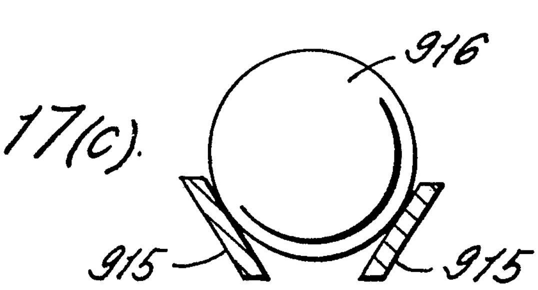

FIG. 18.

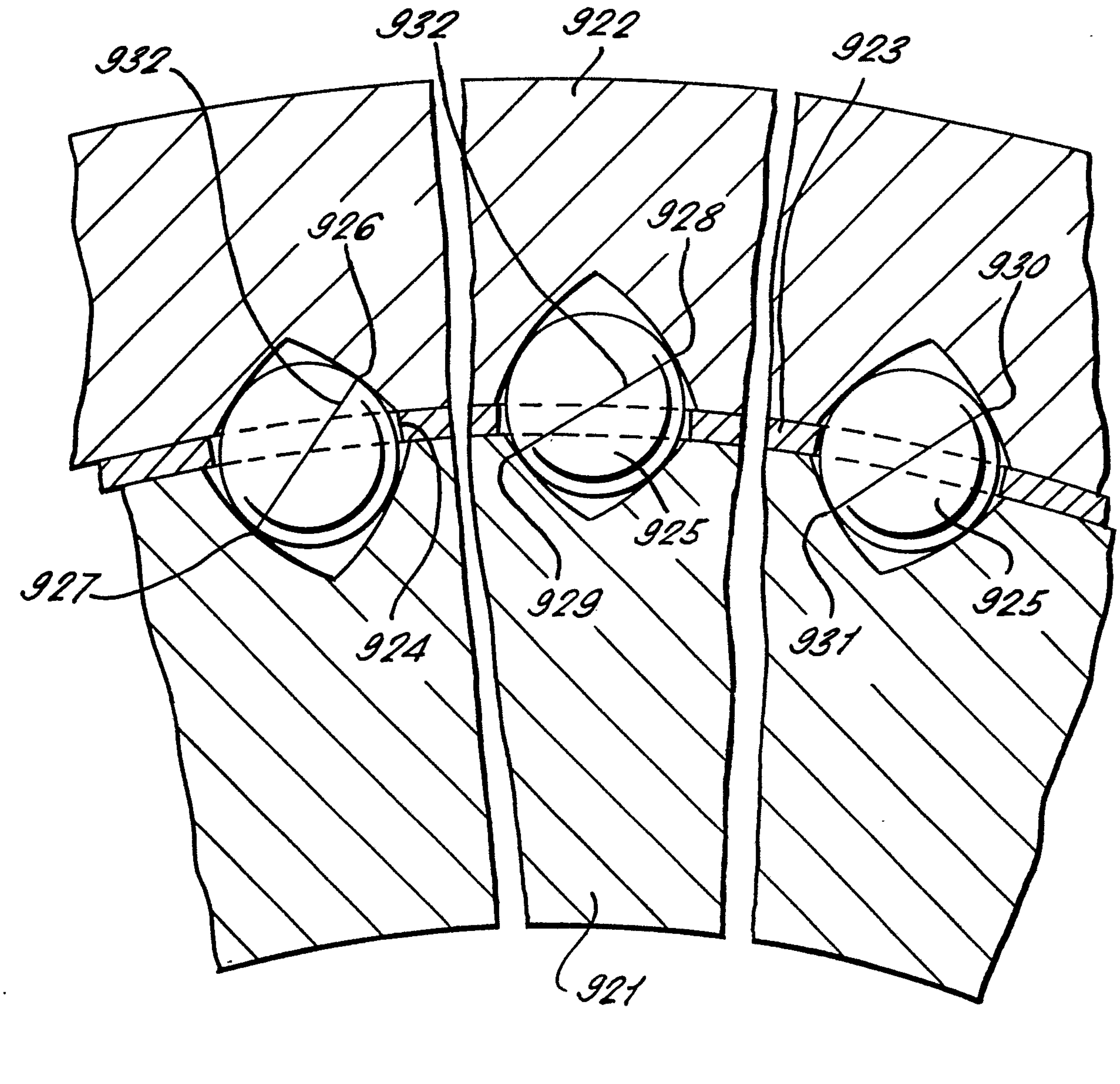

European Patent Office

# EUROPEAN SEARCH REPORT

0078168
Application number

EP 82 30 5636

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | GB-A- 328 907 (VALLANGE) *The whole document* | 1-59 | F 16 H 25/06 |
| Y | FR-A-2 308 024 (SOCIETE BALCKE-FURR A.G.) *Page 1, lines 20-26; figure 13* | 1-59 | |
| X,D | GB-A-2 085 994 (J.C.CARDEN) *The whole document* | 1-59 | |

TECHNICAL FIELDS SEARCHED (Int. Cl. 3)

F 16 H

The present search report has been drawn up for all claims

| Place of search | Date of completion of the search | Examiner |
|---|---|---|
| THE HAGUE | 21-01-1983 | BEERNAERT J.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82